# EUROPEAN PATENT SPECIFICATION

(11) **EP 4 087 172 B1**
(45) Date of publication and mention of the grant of the patent: **18.11.2026**
(21) Application number: 22166016.0
(22) Date of filing: 09.08.2018
(51) Int. Cl.: H04L 5/00, H04W 72/04

(54) **INFORMATION SENDING AND RECEIVING METHOD AND APPARATUS**
VERFAHREN UND VORRICHTUNGEN ZUM SENDEN UND EMPFANGEN VON INFORMATIONEN
PROCÉDÉ ET APPAREIL D'ENVOI ET DE RÉCEPTION D'INFORMATIONS

(30) Priority: 11.08.2017 CN 201710690892
(43) Date of publication of application: 09.11.2022
(62) Document number(s) of the earlier application(s) in accordance with Art. 76 EPC: 18843882.4 / 3 667 986
(73) Proprietor: Huawei Technologies Co., Ltd., Longgang District Shenzhen, Guangdong 518129 (CN)
(72) Inventor: GAO, Kuandong, Shenzhen, 518129 (CN); HUANG, Huang, Shenzhen, 518129 (CN); LI, Sainan, Shenzhen, 518129 (CN)
(74) Representative: Pfenning, Meinig & Partner mbB

(56) References cited:
- US-A1- 2015 181 575
- NOKIA: "Repetition Period of System Information Blocks in Cell Selection and Reselection Scenarios", 3GPP DRAFT; R4S0000XX-SIB_SCHEDULING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. MalmÃ ; 20000719, 19 July 2000 (2000-07-19), XP050180776
- SAMSUNG: "Remaining system information delivery", vol. RAN WG1, no. Hangzhou; 20170515 - 20170519, 14 May 2017 (2017-05-14), XP051273128, Retrieved from the Internet <URL:http://www.3gpp.org/ftp/Meetings_3GPP_SYNC/RAN1/Docs/> [retrieved on 20170514]
- ERICSSON: "NR delivery of remaining system information", vol. RAN WG1, no. Hangzhou; 20170515 - 20170519, 7 May 2017 (2017-05-07), XP051263290, Retrieved from the Internet <URL:http://www.3gpp.org/ftp/tsg_ran/WG1_RL1/TSGR1_89/Docs/> [retrieved on 20170507]

## Description

### TECHNICAL FIELD

The present invention relates to the field of network communications, and in particular, to an information sending and receiving method and apparatus.

### BACKGROUND

In a 5G communications system, a carrier frequency, such as 6 GHz, higher than that in long term evolution (Long Term Evolution, LTE) is used to implement wireless communication with larger bandwidth and a higher transmission rate. Because the carrier frequency is relatively high, a radio signal transmitted by using the carrier frequency experiences more severe fading in a space propagation process, and even it is difficult to detect the radio signal at a receive end, in the 5G communications system, a beamforming (beamforming) technology is used to obtain a beam with good directivity, so as to increase power in a transmit direction, thereby improving a signal to interference plus noise ratio (Signal to Interference plus Noise Ratio, SINR) at the receive end. To improve communication quality, the beamforming technology is also used on a terminal device side to generate analog beams in different directions, so as to receive and send data. Because both a base station and user equipment perform communication by using a relatively narrow analog beam, better communication quality is obtained only when an analog beam used for sending and an analog beam used for receiving are aligned. Therefore, it is determined in a 3GPP RAN1 conference that a beam pair between the base station and the terminal device is determined in a beam sweeping (Beam sweeping) process in new radio (New Radio, NR).

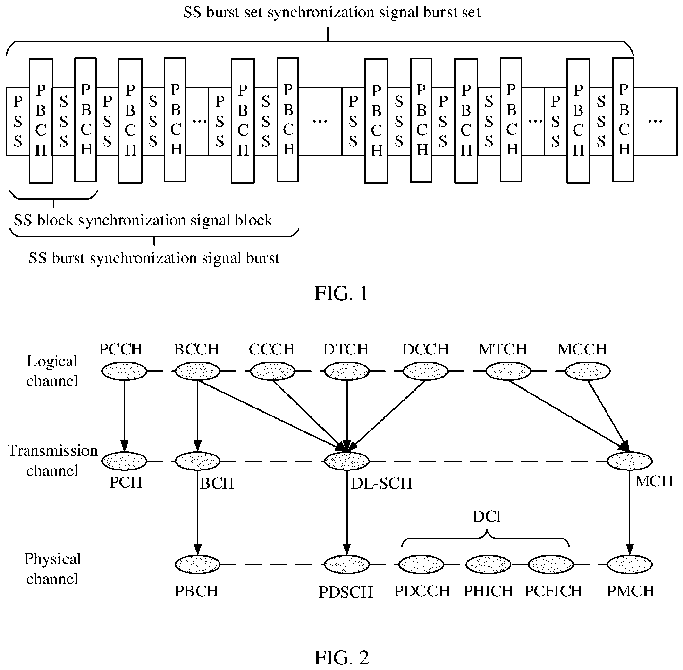

However, beam sweeping brings many problems, one of the problems is that overheads of broadcast information transmission increase. To flexibly schedule the overheads of the broadcast information transmission, a plurality of SS burst set periods: 5 ms, 10 ms, 20 ms, 40 ms, 80 ms, and 160 ms are defined in NR, so as to be more flexibly applicable to more application scenarios. In NR, a synchronization signal block (Synchronization Signal block, SS block) is a combination of PSS-PBCH-SSS-PBCH. The SSS is a primary synchronization signal (Secondary Synchronization Signal, SSS), the PSS is a secondary synchronization signal (Primary Synchronization Signal, PSS), and the PBCH is a physical broadcast channel (Physical Broadcast channel, PBCH). Therefore, a PBCH period may also be understood as an SS burst set period. FIG. 1 is a schematic structural diagram of a synchronization block burst set (SS burst set) according to this application. A plurality of synchronization signal blocks further constitute a synchronization signal burst SS burst, and a plurality of SS bursts further constitute a synchronization signal burst set SS burst set.

In NR, master information block (Master Information Block, MIB) information on the PBCH and remaining minimum system information (Remaining Minimum System Information, RMSI) on a physical downlink shared channel (Physical Downlink Shared Channel, PDSCH) jointly carry complete content of minimum system information (Minimum System Information, MSI). It may be understood that there may be a plurality of possibilities for an RMSI period due to a plurality of possibilities of the SS burst set period. Therefore, the RMSI period needs to be defined for effectively obtaining the MSI.

NOKIA: "Repetition Period of System Information Blocks in Cell Selection and Reselection Scenario", 3GPP DRAFT; R4S0000XX-SIB_SCHEDULING;, vol. RAN WG4, no.Malmö; 2000-07-19, discloses that the position of the system information blocks (SIB) is determined by the repetition period and the position within this period; the repetition period can be 4, 8, 16, ..., 2048 frames, i.e. the information blocks are repeated every 40, 80, 160, ..., 20480 ms.

US 2015/181575 A1 discloses that the MTC SI transmission block includes a MTC Master Information Block (MIB) and a number of MTC System Information Blocks (SIBs). Two consecutive transmissions of the MTC SI are separated by N number of frames, and N is an integer number.

ERICSSON: "NR delivery of remaining system information", 3GPP DRAFT; R1-1708723; vol. RAN WG4, no. Hangzhou; 2017-05-07, discloses that ND-PDSCH carrying the remaining minimum system information is transmitted with a certain periodicity (e.g. 80 ms) with different redundancy versions in case of multiple transmissions within the TTI, and the TTI for the remaining minimum system information is up to RAN2. Further examples of prior art systems and methods are disclosed in SAMSUNG: "Remaining system information delivery", 3GPP DRAFT; R1-1707930, vol. RAN WG1, no. Hangzhou; 2017-05-14.

### SUMMARY

The present invention is by the independent claims. Particular embodiments are defined by the appended dependent claims. To resolve the foregoing technical problem, embodiments of the present invention as defined in the appended independent claims provide an information sending and receiving method and apparatus, a computer program product and a system, to resolve a technical problem of how a terminal device effectively obtains RMSI information in NR.

### BRIEF DESCRIPTION OF DRAWINGS

To describe the technical solutions in embodiments of the present invention or in the background more clearly, the following describes the accompanying drawings required for describing the embodiments of the present invention or the background.
FIG. 1 is a schematic structural diagram of an SS block burst set according to this application;
FIG. 2 is a schematic structural diagram of a channel according to an embodiment of the present invention;
FIG. 3 is an architectural diagram of a communications system according to an embodiment of the present invention;
FIG. 4 is a schematic flowchart of an information sending and receiving method according to an embodiment of the present invention;
FIG. 5 is a schematic flowchart of another information sending and receiving method according to an embodiment of the present invention;
FIG. 6 is a schematic structural diagram of a TTI according to an embodiment of the present invention;
FIG. 7 is a schematic flowchart of still another information sending and receiving method according to an embodiment of the present invention;
FIG. 8 is a schematic flowchart of still another information sending and receiving method according to an embodiment of the present invention;
FIG. 9A is a schematic diagram of a period of transmission performed by using different beam according to an embodiment of the present invention;
FIG. 9B is a schematic diagram of a period of transmitting RMSI by using different beams within one TTI according to an embodiment of the present invention;
FIG. 9C is a schematic diagram of transmission performed by using different beams that have a time offset relative to a period location according to an embodiment of the present invention;
FIG. 10 is a schematic structural diagram of an information sending apparatus according to an embodiment of the present invention;
FIG. 11 is a schematic structural diagram of another information sending apparatus according to an embodiment of the present invention;
FIG. 12 is a schematic structural diagram of still another information sending apparatus according to an embodiment of the present invention;
FIG. 13 is a schematic structural diagram of still another information sending apparatus according to an embodiment of the present invention;
FIG. 14 is a schematic structural diagram of an information receiving apparatus according to an embodiment of the present invention;
FIG. 15 is a schematic structural diagram of another information receiving apparatus according to an embodiment of the present invention;
FIG. 16 is a schematic structural diagram of still another information receiving apparatus according to an embodiment of the present invention;
FIG. 17 is a schematic structural diagram of still another information receiving apparatus according to an embodiment of the present invention;
FIG. 18 is a schematic structural diagram of an information receiving apparatus according to an embodiment of the present invention; and
FIG. 19 is a schematic structural diagram of an information sending apparatus according to an embodiment of the present invention.

### DESCRIPTION OF EMBODIMENTS

The following describes the embodiments of the present invention with reference to the accompanying drawings in the embodiments of the present invention.

In the specification, claims, and accompanying drawings of this application, the terms "first", "second", "third", "fourth", and the like are intended to distinguish between different objects but do not indicate a particular order. In addition, the terms "including" and "having" and any other variants thereof are intended to cover non-exclusive inclusion. For example, processes, methods, systems, products, or devices that include a series of steps or units are not limited to the listed steps or units, but optionally further includes an unlisted step or unit, or optionally further includes another inherent step or unit of these processes, methods, products, or devices.

Mentioning an "embodiment" in this specification means that a particular characteristic, structure, or feature described with reference to the embodiment may be included in at least one embodiment of this application. The phrase appearing in various locations in this specification may not necessarily refer to a same embodiment, and is not an independent or optional embodiment exclusive from another embodiment. It is explicitly and implicitly understood by a person skilled in the art that the embodiments described in this specification may be combined with another embodiment.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As shown in figures, both a computing device and an application that runs on a computing device may be components. One or more components may reside within a process and/or a thread of execution, and a component may be located on one computer and/or distributed between two or more computers. In addition, these components may be executed from various computer readable media that store various data structures. For example, the components may perform, by using a local and/or remote process, communication based on a signal having one or more data packets (for example, data from two components interacting with another component in a local system, a distributed system, and/or across a network such as the Internet interacting with other systems by using a signal).

The following describes some terms in this application, to facilitate understanding of a person skilled in the art.
(1) Logical channel: The logical channel describes a type of information, to be specific, defining a specific type of to-be-transmitted information. An interface between a media access control (Media Access Control, MAC) layer and a radio link control (Radio Link Control, RLC) layer is a logical channel. The MAC layer provides a service for the RLC layer through the logical channel.
   FIG. 2 is a schematic structural diagram of a channel according to an embodiment of the present invention. Logical channels are classified into two types: a logical control channel and a logical traffic channel. The logical control channel is used to transmit control plane information, and may include a PCCH (Paging Control Channel), a CCCH (Common Control Channel), and a DCCH (Dedicated Control Channel). The logical traffic channel is used to transmit user plane information, and may include a DTCH (Dedicated Traffic Channel), and an MTCH (Multicast Traffic Channel).
(2) Transmission channel: The transmission channel describes a transmission mode of information, to be specific, defining how information is transmitted. An interface between a physical layer (Physical Layer, PHY) and a media access control (MAC) layer is a transmission channel. The PHY layer provides a service for the MAC layer through the transmission channel. Transmission channels may be generally classified based on a manner in which a signal is transmitted on a radio interface, for example, a channel coding policy, a modulation method, and an antenna mapping manner.
   As shown in FIG. 2, a transmission channel may include a DL-SCH (Downlink Shared Channel), a BCH (Broadcast Channel), an MCH (Multicast Channel), a PCH (Paging Channel), a UL-SCH (Uplink Shared Channel), and a RACH (Random Access Channel).
(3) Physical channel: The physical channel is used to transmit a specific signal at a physical layer. The physical channel corresponds to a set of resource elements (Resource Element, RE) that carry higher layer information. Basic entities included in the physical channel include a resource element (RE) and a resource block (Resource Block, RB).

As shown in FIG. 2, a physical channel may include a PDCCH (Physical Downlink Control Channel), a PDSCH (Physical Downlink Shared Channel), a PBCH (Physical Broadcast Channel), a PMCH (Physical Multicast Channel), a PHICH (Physical Hybrid ARQ Indicator Channel), a PCFICH (Physical Control Format Indicator Channel), a PUCCH (Physical Uplink Control Channel), a PUSCH (Physical Uplink Shared Channel), and a PRACH (Physical Random Access Channel).

First, a to-be-resolved technical problem and an application scenario in this application are proposed. In the prior art, before accessing a cell, a terminal device needs to first obtain system information of the cell, so as to know a configuration of the cell, so that the terminal device can correctly work in the cell. The cell sends the system information to all terminal devices in the cell through a logical channel BCCH. In the prior art, LTE system broadcast information (namely, a logical channel BCCH) is divided into a master information block (Master Information Block, MIB) and a system information block (System Information Block, SIB). It can be learned from FIG. 2 that the logical channel BCCH is mapped to transmission channels BCH and DL-SCH. The BCH is only used to transmit MIB information, and is mapped to a fixed physical resource of a physical channel PBCH for transmission. The DL-SCH is used to transmit various SIB information, and is mapped to a physical channel PDSCH for scheduling transmission.

The master information block (Master Information Block, MIB) information is basic configuration information of a system. For example, the MIB includes at least one type of the following information: downlink system bandwidth, a system frame number (SFN), PHICH indication information, antenna configuration information, and the like. The MIB information is carried on the BCCH→BCH→PBCH, where a PBCH period is 40 ms, same content is repeatedly transmitted (or a different redundancy version RV may be repeatedly transmitted) every 10 ms in one period, and transmission of the same content is fixed at a subframe 0 of each radio frame. A terminal needs to perform blind detection and demodulation. To be specific, the terminal may receive and demodulate the BCH at any one of the four times of blind detection and demodulation.

The system information block (System Information Block, SIB) includes a SIB 1 to a SIB 12. The SIB is carried on the BCCH→DL-SCH→PDSCH, where a PDSCH period is 80 ms, and same content is repeatedly transmitted every 20 ms in one period, and transmission of the same content is fixed at a subframe 5 of each radio frame.

The SIB 1 includes a PLMN ID, a cell global ID, a cell barring state, a cell selection parameter, and SI information.

The SIB 2 includes common radio resource configuration and uplink bandwidth.

The SIB 3 includes cell reselection information (serving cell information).

The SIB 4 includes neighboring cell information.

The SIB 5 includes neighboring cell information.

The SIB 6 includes neighboring cell information.

The SIB 7 includes neighboring cell information.

The SIB 8 includes neighboring cell information.

The SIB 9 includes an HeNB ID.

The SIB 10 includes ETWS primary notification information.

The SIB 11 includes ETWS secondary notification information.

The SIB 12 includes MBSFN area list information and MBSFN information.

In LTE, system information is formed by using system information blocks (SIB). Each SIB includes a parameter related to a function. The most basic and important system information used by UE to access a network is used as MSI (Minimum SI), and is sent through periodic broadcasting. The MSI further includes EMSI (for example, located in an SS block as described above and carried by using a PBCH) and RMSI. The RMSI is carried by using a PDSCH in some fixed slots (for example, one or more subframes/slots), and is scheduled by using a PDCCH. The EMSI and the RMSI are sent through periodic broadcasting, and may have different transmission periods. Currently, in new radio NR, MIB information on the PBCH and remaining minimum system information (Remaining Minimum System Information, RMSI) on the PDSCH jointly carry complete content of the minimum system information (Minimum System Information, MSI). Because a PBCH period (the PBCH period may also be referred to as an SS burst set period in this application) is flexible, and beam scanning is used, overheads of broadcast information is determined based on a quantity of beams, an increased quantity of beams leads to increased overheads of the broadcast information, and an RMSI period may need to be increased to reduce the overheads. However, when the quantity of beams decreases, the overheads of the broadcast information may be reduced. Therefore, a relatively small RMSI period may be used to reduce an access time. In other words, if a manner in which a transmission period and a transmission time position of an SIB 1 are fixed in LTE is used, flexibility is poor, and the manner is not applicable to an NR application scenario.

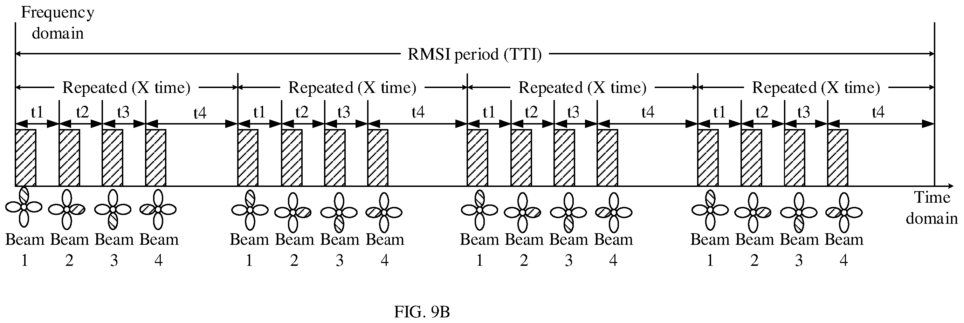

However, for a terminal device in NR, after obtaining the MIB information, the terminal device further needs to obtain the RMSI information, so as to obtain the complete MSI information, so that the terminal device may perform basic cell access. Therefore, correctly and effectively obtaining the MIB and the RMSI information can improve efficiency of accessing a cell by the terminal device. Therefore, the to-be-resolved technical problem in this application is how to define an RMSI period in an NR system, so that the RMSI period can be more flexibly applicable to the NR application scenario and the terminal device can conveniently obtain the RMSI information. The RMSI period may be a scheduling period of the RMSI. As shown in FIG. 9B, in the scheduling period of the RMSI, the RMSI may be repeatedly transmitted, or may not be repeatedly transmitted. Different repeated transmissions may be performed in different scheduling manners, for example, repeated transmissions performed by using different redundancy versions (redundant version, RV) or in different scrambling manners, or repeated transmission performed by a base station based on a quantity of synchronization blocks (synchronization signal block, SS block), or repeated transmission performed by using different antenna ports, or repeated transmission performed by using different beams, or repeated transmission performed based on a purpose that the base station covers different areas. When the RMSI is repeatedly transmitted in a period, the scheduling period of the RMSI may also be referred to as a transmission time interval (transmission time interval, TTI) period.

It should be understood that, the embodiments of the present invention may be applied to a next-generation communications system, for example, a 5G radio access (New Radio Access Technology in 3GPP, NR) system, which is referred to as a 5G NR system for short.

For ease of understanding of the embodiments of the present invention, based on the foregoing descriptions, the following first describes an architecture of a communications system, where the embodiments of the present invention are based on the architecture of the communications system.

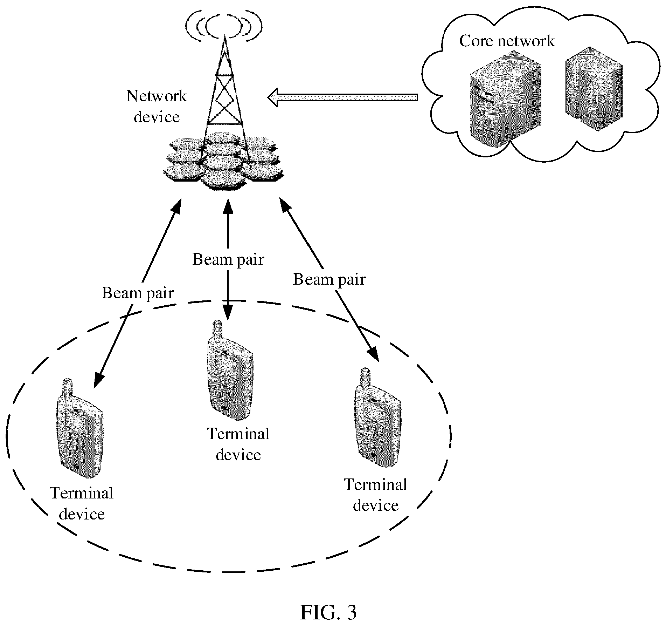

FIG. 3 is an architectural diagram of a communications system according to an embodiment of the present invention. The architecture of the communications system includes a core network, a network device, and a terminal device. As an example rather than a limitation, the core network provides a related service for an entire communication process, the network device indicates MIB information and RMSI information for the accessed terminal device, and the terminal device performs cell access by using MSI information indicated by the network device.

The terminal device is a device that has a wireless transceiving function. The terminal device may be deployed on land, including an indoor, outdoor, handheld, wearable, or vehicle-mounted device; or may be deployed on a water surface (for example, on a steamboat); or may be deployed in the air (for example, on a plane, a balloon, or a satellite). The terminal device may be a mobile phone (mobile phone), a tablet computer (Pad), a computer with a wireless transceiving function, a virtual reality (Virtual Reality, VR) terminal device, an augmented reality (Augmented Reality, AR) terminal device, a wireless terminal in industrial control (industrial control), a wireless terminal in self driving (self driving), a wireless terminal in remote medical (remote medical), or a wireless terminal in smart grid (smart grid), a wireless terminal in transportation safety (transportation safety), a wireless terminal in a smart city (smart city), a wireless terminal in a smart home (smart home), or the like. An application scenario is not limited in the embodiments of this application. The terminal device may also be sometimes referred to as user equipment (user equipment, UE), an access terminal device, a UE unit, a UE station, a mobile station, a mobile console, a remote station, a remote terminal device, a mobile device, a UE terminal device, a terminal device, a wireless communications device, a UE proxy, a UE apparatus, or the like.

The network device may be a network element on a network side in a 5G communications system, for example, may be a gNB in the 5G communications system. Specifically, the network device supports determining, of a beam pair between the network device and the terminal device, which is performed by using a beam sweeping process, and monitors a plurality of beam pairs in a communication process, so as to improve robustness of a communication link. To improve coverage of the network device and ensure that the terminal device can quickly obtain a synchronization signal, system information, and the like that are required for accessing a network, the network device further supports periodic broadcasting of the information. It may be understood that because both the network device and the terminal device perform communication by using a relatively narrow analog beam, better communication quality is obtained only when an analog beam used for sending and an analog beam used for receiving are aligned. For more specific description, refer to descriptions in the following embodiment. In addition, various embodiments are described with reference to the network device in the embodiments of the present invention. The network device may be a device, such as a network device, configured to communicate with a mobile device. The network device may be an access point (ACCESS POINT, AP) in a WLAN, a relay node or an access point, a vehicle-mounted device, a wearable device, or a network device (g Node B, "gNB" for short or "gNodeB" for short) in a future 5G network, or a network device in a future evolved PLMN network, or the like.

In addition, in this embodiment of the present invention, the network device serves a cell, and the terminal device communicates with the network device by using a transmission resource (for example, a frequency domain resource or a spectrum resource) used by the cell. The cell may be a cell corresponding to the network device (for example, a base station). The cell may belong to a macro base station, or may belong to a base station corresponding to a small cell (small cell). The small cell herein may include a metro cell (Metro cell), a micro cell (Micro cell), a pico cell (Pico cell), a femto cell (Femto cell), and the like. These small cells are characterized by a small coverage area and a low transmit power, and are applicable to providing a high-rate data transmission service.

It may be understood that the architecture of the communications system in FIG. 3 is only an example implementation in the embodiments of the present invention, and architectures of the communications system in the embodiments of the present invention include but are not limited to the foregoing architecture of the communications system.

With reference to an embodiments of a congestion control method provided in this application, the following specifically analyzes and resolves the technical problem proposed in this application.

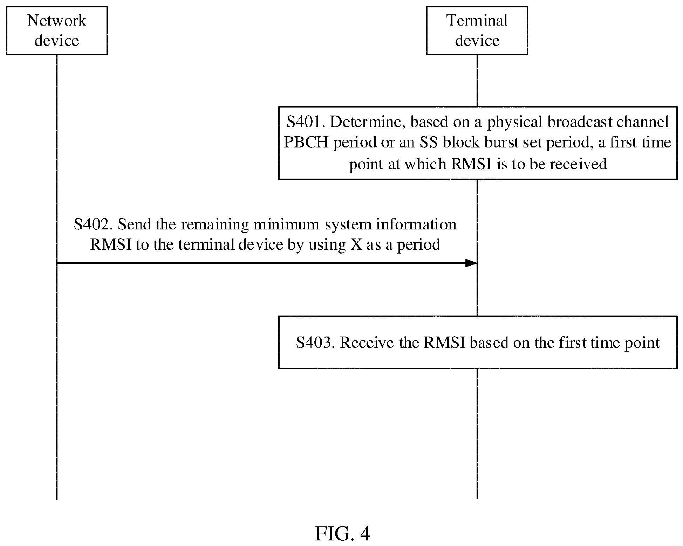

FIG. 4 is a schematic flowchart of an information sending and receiving method according to an embodiment of the present invention. The method may be applied to the communications system in FIG. 3. The following performs description from a perspective of an interaction between a network device and a terminal device with reference to FIG. 4. The method may include the following step S401 to step S403.

Step S401: The terminal device determines, based on a physical broadcast channel PBCH period or an SS block burst set period, a first time point at which RMSI is to be received, where the RMSI is RMSI sent by the network device to the terminal device by using X as a period, and X is a multiple of the PBCH period, or X and the PBCH period or the SS block burst set period are in a one-to-one correspondence or a one-to-many relationship, and in a process in which the RMSI is sent once, the network device sends at least one piece of RMSI by using at least one beam or antenna port.

Step S402: The network device sends the remaining minimum system information RMSI to the terminal device by using X as the period, where X is a multiple of the PBCH period or the SS block burst set period, or X and the PBCH period or the SS block burst set period are in a one-to-one correspondence or a one-to-many relationship, and in the process in which the RMSI is sent once, the network device sends the at least one piece of RMSI by using the at least one beam or antenna port.

Step S403: The terminal device receives the RMSI based on the first time point.

Specifically, sending the RMSI in this application refers to sending the RMSI once. In the process in which the RMSI is sent once, the network device sends the at least one piece of RMSI by using the at least one beam or antenna port.

For example, the network device schedules the RMSI once every X time by using L (greater than or equal to 1) beams or antenna ports, where the RMSI is carried by a physical downlink shared channel PDSCH, the PDSCH is scheduled by using a physical downlink control channel PDCCH, and the X time may be understood as an RMSI period.

For another example, the network device repeatedly transmits the RMSI by using different RV versions and/or repeatedly transmits the RMSI in different data scrambling manners every X time, where a quantity of repetition times is less than or equal to M, M is an integer greater than or equal to 1, and M*X is a scheduling period of the RMSI (which may also be referred to as a repetition rate).

In a possible implementation, a beam/port used to send the RSMI is a beam/port of an SS block, and a quantity of beams/ports used to send the RSMI may be less than or equal to a quantity of beams/ports of the SS block).

In a possible implementation, the antenna port used to transmit the RMSI and the SS block are in a quasi-co-located QCL relationship.

It may be understood that, in actual application, N beams used by the network device may be the same as or quasi co-located (English: Quasi co-located, QCL for short) with transmit beams of SS blocks included in a synchronization signal block set SS burst set, where QCL parameters include at least one of the following items: an average gain average gain, an average delay average delay, a delay spread delay spread, a Doppler shift Doppler shift, a Doppler spread Doppler spread, and a spatial transmit/receive Spatial Tx/Rx parameter. The spatial Tx/Rx parameter includes an angle of arrival (Angle Of Arrival, AoA)/angle of departure (Angle of Departure, AoD), a dominant Dominant AoA/AoD, an average average AoA/AoD, a power angular spectrum (Power Angular Spectrum, PAS) of AoA/AoD, transmit/receive channel correlation transmit/receive channel correlation, transmit/receive beamforming transmit/receive beamforming, spatial channel correlation spatial channel correlation, and the like.

In a possible implementation, the RMSI may include one or more of configuration information of a random access channel, configuration information of a paging channel, configuration information of a downlink shared channel, configuration information of an uplink shared channel, a public land mobile network identity list PLMN-Identity List, a tracking area code, cell barring access information, scheduling information of other system information OSI, scheduling information of a system information block SIB 1, a system information value tag (SI Value Tag), bandwidth indication information, and cell reselection information.

In a possible implementation, the network device or the terminal device may pre-store information about an association relationship (for example, an integral multiple or a fractional multiple relationship) between the PBCH period or the SS block burst set period and the RMSI period (namely, the X time). In addition, because the terminal device obtains MIB information before obtaining the RMSI information, the terminal device may first learn of the PBCH period or the SS block burst set period by using the MIB information, and then finally determine the RMSI period based on the information about the relationship between the RMSI period and the PBCH period.

In another possible implementation, the information about the association relationship between the PBCH period or the SS block burst set period and the RMSI period (namely, the X time) may further be sent by the network device to the terminal device.

In another possible implementation, the network device may further send indication information to the terminal device, where the indication information is used to indicate the PBCH period or the SS block burst set period. Specifically, the network device may indicate the PBCH period or the SS block burst set period to the terminal device in the MIB information on a PBCH in an explicit or implicit manner. In this case, the indication information may be the MIB information. After receiving the MIB information on the PBCH, the terminal device may learn of the PBCH period, and then determine, based on the pre-specified association relationship (for example, a multiple relationship) between the PBCH period and the RMSI period, the first time point at which the RMSI is to be received.

It may be understood that the network device may also add the indication information to information on the PBCH or another channel. This is not specifically limited in this application. It may be further understood that, because the RMSI on the PDSCH is a periodically broadcast system message, the first time point may be one time point, or may be a plurality of periodic time points. For example, the first time point is a 5^{th} ms, a 10^{th} ms, a 15^{th} ms, or the like.

For the foregoing step S402, the network device side may send the RMSI to the terminal device on the physical downlink shared channel PDSCH every X time based on the preconfigured or pre-stored information about the association relationship between the PBCH and the RMSI period. For example, the network device sends the RMSI to the terminal device every X time through PDSCH, where X is equal to 5 ms, 10 ms, 20 ms, 40 ms, 80 ms, and 160 ms.

For the foregoing step S403, after determining the first time point based on the association relationship between the PBCH period and the RMSI period, the terminal device monitors the RMSI on the PDSCH at the first time point (which may be one time point or a plurality of time points).

In this embodiment of the present invention, it is proposed that the RMSI period is related to the PBCH period. Therefore, the RMSI period and the PBCH period may be both learned provided that any one of the periods is notified or indicated, thereby saving overheads and simplifying an indication process. The following describes how to specify the association relationship between the PBCH period and the RMSI period in this application.

In a possible implementation, X is a multiple of the PBCH period or the SS block burst set period, and there may specifically be an integer multiple relationship or a fractional multiple relationship between X and the PBCH period or the SS block burst set period. The following performs description by using Manner 1 and Manner 2 as examples.

Manner 1: In Manner 1, the RMSI period or the SS block burst set period is N times the length of the PBCH period, where N is greater than 0, N=2ⁿ, and n is an integer. In other words, the RMSI period and the PBCH period may be in a simple multiple relationship. A specific implementation may be as follows:
1. The RMSI period is N times the PBCH period or the SS block burst set period. There may be only one value of N, to be specific, regardless of the PBCH period, the RMSI period is a fixed multiple of the PBCH period, for example, N=2.
2. The network device indicates the PBCH period or the SS block burst set period by using the MIB information on the PBCH. For example, the PBCH period or the SS block burst set period may be 5 ms, 10 ms, 20 ms, 40 ms, 80 ms, and 160 ms.
3. After receiving the MIB information added by the network device to the PBCH, the terminal device learns of the PBCH period or the SS block burst set period, and may determine, based on information that is about the relationship between the PBCH period and the RMSI period and that is pre-stored based on a protocol or received from the network device, the period in which the RMSI is to be received, to be specific, the first time point at which the RMSI is to be received. Details are shown in the following Table 1.

**Table 1**

| PBCH period (or SS block burst set period) | RMSI period (X time) | Association relationship |
|---|---|---|
| 5 ms | 10 ms | 2 times |
| 10 ms | 20 ms | 2 times |
| 20 ms | 40 ms | 2 times |
| 40 ms | 80 ms | 2 times |
| 80 ms | 160 ms | 2 times |
| 160 ms | 160 ms | 2 times |
| ... | ... | ... |

Manner 2: In Manner 2, the RMSI period or the SS block burst set period is N times the PBCH period, where N is greater than 0. N=2ⁿ, and n is a positive integer and/or a negative integer. In other words, the RMSI period and the PBCH period or the SS block burst set period are still in a multiple relationship, but the multiple relationship may change with the PBCH period. A specific implementation may be as follows:
1. The RMSI period is N times the PBCH period or the SS block burst set period. There may be a plurality of values of N. In other words, a corresponding value of N may vary with the PBCH period. For example, when the PBCH period is 5 ms, 10 ms, or 20 ms, N=4, to be specific, the RMSI period is always four times the PBCH period. When the PBCH period or the SS block burst set period is 40 ms, 80 ms, or 160 ms, N=4, to be specific, the RMSI period is always twice the PBCH period or the SS block burst set period.
2. The network device indicates the PBCH period or the SS block burst set period by using the MIB information on the PBCH. For example, the PBCH period may be 5 ms, 10 ms, 20 ms, 40 ms, 80 ms, and 160 ms.
3. After receiving the MIB information added by the network device to the PBCH, the terminal device learns of the PBCH period or the SS block burst set period, and may determine, based on information that is about the relationship between the PBCH period and the RMSI period and that is pre-stored based on a protocol or received from the network device, the period in which the RMSI is to be received, to be specific, the first time point at which the RMSI is to be received. Details are shown in the following Table 2.

**Table 2**

| PBCH period (or SS block burst set period) | RMSI period (X time) | Association relationship |
|---|---|---|
| 5 ms | 20 ms | 4 times |
| 10 ms | 40 ms | 4 times |
| 20 ms | 80 ms | 4 times |
| 40 ms | 80 ms | 2 times |
| 80 ms | 160 ms | 2 times |
| 160 ms | 160 ms | 2 times |
| ... | ... | ... |

Certainly, it may be understood that values of the PBCH period and the RMSI period may also be directly specified, for example, the values are shown in the following Table 3.

**Table 3**

| PBCH period (or SS block burst set period) | RMSI period (X time) | Association relationship |
|---|---|---|
| 5 ms | 40 ms | None |
| 10 ms | 40 ms | None |
| 20 ms | 40 ms | None |
| 40 ms | 40 ms | None |
| 80 ms | 40 ms | None |
| 160 ms | 40 ms | None |
| ... | ... | ... |

In a possible implementation, X and the PBCH period or the SS block burst set period are in a one-to-one correspondence or a one-to-many relationship. The following performs description by using Manner 3 and Manner 4 as examples.

Manner 3: In Manner 3, a table of a mapping relationship between the RMSI period and the PBCH period or the SS block burst set period is preconfigured. The RMSI period and the PBCH period may be in a one-to-one correspondence, and a specific implementation may be as follows:
1. A direct mapping relationship between the RMSI period and the PBCH period or the SS block burst set period may be a one-to-one mapping relationship. For example, in the one-to-one relationship, when the PBCH period is 5 ms, the RMSI period is 10 ms, or when the PBCH period is 10 ms, the RMSI period is 20 ms.
2. The network device indicates the PBCH period or the SS block burst set period by using the MIB information on a PDCH. For example, the PBCH period may be 5 ms, 10 ms, 20 ms, 40 ms, 80 ms, and 160 ms.
3. After receiving the MIB information added by the network device to the PBCH, the terminal device learns of the PBCH period or the SS block burst set period, and may determine, based on information that is about the relationship between the PBCH period and the RMSI period and that is pre-stored based on a protocol or received from the network device, the period in which the RMSI is to be received, to be specific, the first time point at which the RMSI is to be received. Alternatively, the terminal device determines the PBCH period based on the RMSI period. Details are shown in the following Table 4.

**Table 4**

| PBCH period (or SS block burst set period) | RMSI period (X time) | Association relationship |
|---|---|---|
| 5 ms | 10 ms | One-to-one correspondence |
| 10 ms | 20 ms | One-to-one correspondence |
| 20 ms | 30 ms | One-to-one correspondence |
| 40 ms | 40 ms | One-to-one correspondence |
| 80 ms | 60 ms | One-to-one correspondence |
| 160 ms | 80 ms | One-to-one correspondence |

Manner 4: In Manner 4, a table of a mapping relationship between the RMSI period and the PBCH period or the SS block burst set period is preconfigured. The PBCH period and the RMSI period may be in a one-to-many relationship, and a specific implementation may be as follows:
1. The PBCH period or the SS block burst set period and the RMSI period are in a one-to-many mapping relationship. For example, in the one-to-many relationship, when the PBCH period is 5 ms or 10 ms, the RMSI period is 20 ms; when the PBCH period is 20 ms or 40 ms, the RMSI period is 80 ms; or when the PBCH period is 80 ms or 160 ms, the RMSI period is160 ms.
2. The network device indicates the PBCH period or the SS block burst set period by using the MIB information on a PDCH. For example, the PBCH period may be 5 ms, 10 ms, 20 ms, 40 ms, 80 ms, and 160 ms.
3. After receiving the MIB information added by the network device to the PBCH, the terminal device learns of the PBCH period or the SS block burst set period, and may determine, based on information that is about the relationship between the PBCH period and the RMSI period and that is pre-stored based on a protocol or received from the network device, the period in which the RMSI is to be received, to be specific, the first time point at which the RMSI is to be received. Details are shown in the following Table 5.

**Table 5**

| PBCH period (or SS block burst set period) | RMSI period (X time) | Association relationship |
|---|---|---|
| 5 ms | 20 ms | One-to-many mapping relationship |
| 10 ms | | |
| 20 ms | 80 ms | One-to-many mapping relationship |
| 40 ms | | |
| 80 ms | 160 ms | One-to-many mapping relationship |
| 160 ms | | |
| ... | ... | ... |

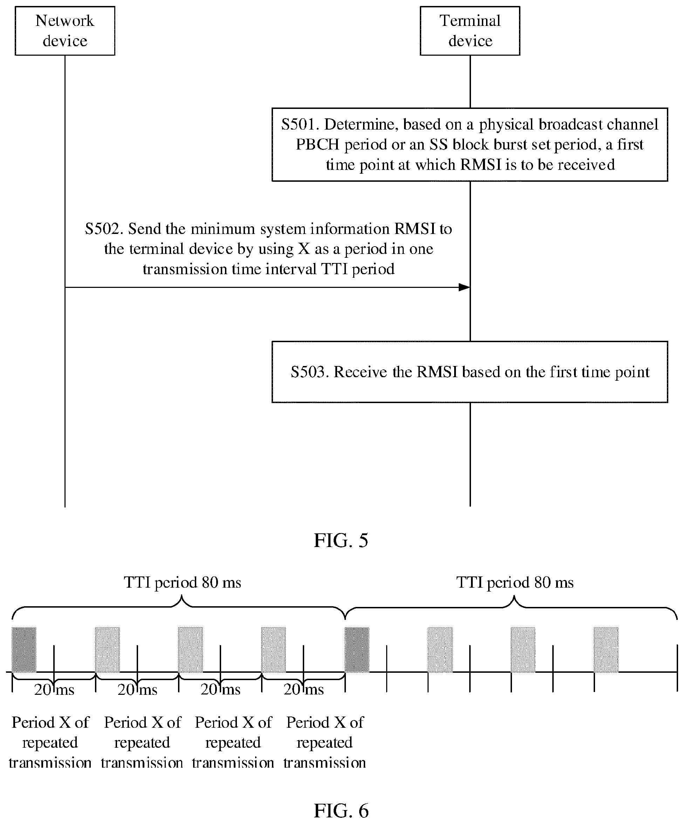

FIG. 5 is a schematic flowchart of another information sending and receiving method according to an embodiment of the present invention. The method may be applied to the communications system in FIG. 3. The following performs description from a perspective of an interaction between a network device and a terminal device with reference to FIG. 5. The method may include the following step S501 to step S503.

Step S501: The terminal device determines, based on a physical broadcast channel PBCH period or an SS block burst set period, a first time point at which RMSI is to be received.

Step S502: The network device sends the minimum system information RMSI to the terminal device by using X as a period in one transmission time interval TTI period.

Step S503: The terminal device receives the RMSI based on the first time point.

Specifically, for descriptions of step S501 and step S503, refer to related descriptions of step S401 and step S403 corresponding to FIG. 4. Details are not described herein again.

A difference between step S502 and step S402 corresponding to FIG. 4 lies in that, in step S402 corresponding to FIG. 4, there is no concept of a TTI, in other words, there is no repeated transmission of the RMSI. In this embodiment of the present invention, the TTI period of the RMSI is a scheduling period of the RMSI. In the scheduling period of the RMSI, the RMSI may be repeatedly transmitted, or may not be repeatedly transmitted. Different repeated transmission may be performed in different scheduling manners, for example, repeated transmission performed by using different RV versions or in different scrambling manners, or repeated transmission performed by a base station based on a quantity of SS blocks. When the RMSI is repeatedly transmitted in a period by using different RV versions or in different scrambling manners, the scheduling period of the RMSI may also be referred to as the TTI period of the RMSI. In one TTI, the network device repeatedly transmits the RMSI every X time, where the RMSI is repeatedly transmitted a plurality of times. Therefore, the terminal device needs to know a specific period of repeated transmission and a quantity of times of repeated transmission of the RMSI, so as to receive the RMSI at a correct first time point.

FIG. 6 is a schematic diagram of repeatedly transmitting RMSI in a TTI according to an embodiment of the present invention. In FIG. 6, assuming that a TTI period is 80 ms, and RMSI is repeatedly transmitted four times in one TTI period, in the TTI period, the RMSI is repeatedly transmitted on a PDSCH every 20 ms. After one TTI, new RMSI is repeatedly transmitted. The following performs description by using two types of association modes.

In a first type of association mode, in this embodiment of the present invention, it is proposed that the TTI period is a preset value, and X is associated with the PBCH period. To be specific, the network device and the terminal device agree on that the TTI is a fixed period, and then agree on an association relationship between a period X and the PBCH period or the SS block burst set period, where the period X is a period in which the repeated RMSI is to be transmitted in one TTI. In this case, the terminal device may determine the first time point at which the RMSI is to be received each time, provided that the terminal device learns of the PBCH period. The following describes how to specify an association relationship between X and the PBCH period in this application.

In a possible implementation, X is a multiple of the PBCH period or the SS block burst set period, and there may specifically be an integer multiple relationship or a fractional multiple relationship between X and the PBCH period or the SS block burst set period. The following performs description by using Manner 4 as an example.

Manner 5: In Manner 5, the TTI period of the RMSI, namely, the scheduling period of the RMSI, is a preset value, to be specific, a preset fixed value, for example, 160 ms or 80 ms, and the association relationship between the transmission period X and the PBCH period or the SS block burst set period is a multiple relationship, where the transmission period X is a period in which the repeated RMSI is to be transmitted in the TTI period. A specific implementation may be as follows:
1. The TTI period of the RMSI is fixed. X is N times the PBCH period or the SS block burst set period. For example, the TTI is fixed at 160 ms, and a value of N is fixed at 1. When the PBCH period is 5 ms, and N=1, X=5 ms, and a quantity of times of repeated transmission is 32. When the PBCH period is 20 ms, and N=1, X=20 ms, and a quantity of times of repeated transmission is 8, in other words, X is always equal to the PBCH period. It may be understood that the value of N may also change with the PBCH period. This is not described herein by using an example.
2. The network device indicates the PBCH period, the SS block burst set period, or the RMSI period by using MIB information on a PBCH. For example, the PBCH period may be 5 ms, 10 ms, 20 ms, 40 ms, 80 ms, and 160 ms.
3. After receiving the MIB information added by the network device to the PBCH, the terminal device learns of the PBCH period, and may determine, based on information that is about the relationship between the PBCH period and X and that is pre-stored based on a protocol or received from the network device, the first time point at which the RMSI is to be received. Alternatively, the terminal device may also directly obtain the RMSI period, and obtain the PBCH period based on the RMSI period. Details are shown in the following Table 6.

**Table 6**

| PBCH period (or SS block burst set period) | TTI period | A quantity of times of repeated transmission | Period X of repeated transmission | Association relationship |
|---|---|---|---|---|
| 5 ms | 160 ms | 32 | 5 ms | X is one time the PBCH period |
| 10 ms | | 16 | 10 ms | X is one time the PBCH period |
| 20 ms | | 8 | 20 ms | X is one time the PBCH period |
| 40 ms | | 4 | 40 ms | X is one time the PBCH period |
| 80 ms | | 2 | 80 ms | X is one time the PBCH period |
| 160 ms | | 1 | 160 ms | X is one time the PBCH period |
| ... | | ... | ... | ... |

In a possible implementation, X and the PBCH period are in a one-to-one correspondence. The following performs description by using Manner 5 as an example.

Manner 6: In Manner 6, the TTI period is a preset value, to be specific, a preset fixed value, for example, 160 ms or 80 ms, and the association relationship between the transmission period X and the PBCH period or the SS block burst set period is a one-to-one correspondence, where the transmission period X is a period in which the repeated RMSI is to be transmitted in the TTI period. A specific implementation may be as follows:
1. The TTI period is fixed. A direct mapping relationship between the period of repeated transmission and the PBCH period or the SS block burst set period may be a one-to-one mapping relationship, where the period of repeated transmission is a period in which the repeated RMSI is to be transmitted in one TTI. For example, TTI=160 ms, and in the one-to-one relationship, when the PBCH period is 5 ms, X=10 ms, or when the PBCH period is 10 ms, X=20 ms.
2. The network device indicates the PBCH period, the SS block burst set period, or the RMSI period by using MIB information on a PBCH. For example, the PBCH period may be 5 ms, 10 ms, 20 ms, 40 ms, 80 ms, and 160 ms.
3. After receiving the MIB information added by the network device to the PBCH, the terminal device learns of the PBCH period, and may determine, based on information that is about the relationship between the PBCH period or the SS block burst set period and the RMSI period and that is pre-stored based on a protocol or received from the network device, the period in which the RMSI is to be received, to be specific, the first time point at which the RMSI is to be received, and information about the PBCH period. Details are shown in the following Table 7.

**Table 7**

| PBCH period (or SS block burst set period) | TTI period | A quantity of times of repeated transmission | Period X of repeated transmission | Association relationship |
|---|---|---|---|---|
| 5 ms | 160 ms | 16 | 10 ms | One-to-one correspondence |
| 10 ms | | 8 | 20 ms | One-to-one correspondence |
| 20 ms | | 5 | 32 ms | One-to-one correspondence |
| 40 ms | | 4 | 40 ms | One-to-one correspondence |
| 80 ms | | 2 | 80 ms | One-to-one correspondence |
| 160 ms | | 1 | 160 ms | One-to-one correspondence |
| ... | | ... | ... | ... |

In a possible implementation, X and the PBCH period or the SS block burst set period are in a one-to-many relationship. The following performs description by using Manner 6 as an example.

Manner 7: In Manner 7, the TTI period is a preset value, to be specific, a preset fixed value, for example, 160 ms or 80 ms, and the association relationship between the transmission period X and the PBCH period or the SS block burst set period is a one-to-many correspondence, where the transmission period X is a period in which the repeated RMSI is to be transmitted in the TTI period. A specific implementation may be as follows:
1. The TTI period is fixed. A direct mapping relationship between the period of repeated transmission and the PBCH period or the SS block burst set period may be a one-to-many mapping relationship, where the period of repeated transmission is a period in which the repeated RMSI is to be transmitted in one TTI. For example, in the one-to-many relationship, when the PBCH period is 5 ms and 10 ms, X=40 ms, or when the PBCH period is 20 ms and 40 ms, X=20 ms.
2. The network device indicates the PBCH period or the SS block burst set period by using MIB information on a PBCH. For example, the PBCH period may be 5 ms, 10 ms, 20 ms, 40 ms, 80 ms, and 160 ms.
3. After receiving the MIB information added by the network device to the PBCH, the terminal device learns of the PBCH period or the SS block burst set period or the RMSI period, and may determine, based on information that is about the relationship between the PBCH period and the RMSI period and that is pre-stored based on a protocol or received from the network device, the period in which the RMSI is to be received, to be specific, the first time point at which the RMSI is to be received, or the PBCH period. Details are shown in the following Table 8.

**Table 8**

| PBCH period (or SS block burst set period) | TTI period | A quantity of times of repeated transmission | Period X of repeated transmission | Association relationship |
|---|---|---|---|---|
| 5 ms | 80 ms | 2 | 40 ms | One-to-many correspondence |
| 10 ms | | | | |
| 20 ms | | 4 | 20 ms | One-to-many correspondence |
| 40 ms | | | | |
| 80 ms | | 8 | 10 ms | One-to-many correspondence |
| 160 ms | | | | |
| ... | | ... | ... | ... |

In a second type, in this embodiment of the present invention, it is proposed that X is a preset value, and the TTI period is associated with the PBCH period. To be specific, the network device and the terminal device agree on that a period, of repeated transmission, in which the repeated RMSI is to be transmitted in one TTI is fixed, and then agree on an association relationship between one TTI period and the PBCH period. In this case, the terminal device may simultaneously determine the RMSI period or information about the PBCH period and the first time point at which the RMSI is to be received each time, provided that the terminal learns of any one of the PBCH period and the RMSI period. The following describes how to specify an association relationship between X and the PBCH period in this application.

In a possible implementation, the TTI period is a multiple of the PBCH period, and there may specifically be an integer multiple relationship or a fractional multiple relationship between the TTI period and the PBCH period. The following performs description by using Manner 8 as an example.

Manner 8: In Manner 8, the period X, of repeated transmission, in which the repeated RMSI is to be transmitted in one TTI is a preset value, to be specific, a preset fixed value, and the association relationship between the TTI period and the PBCH period or the SS block burst set period is a multiple relationship. A specific implementation may be as follows:
1. X is fixed, and the TTI is N times the PBCH period or the SS block burst set period. For example, X is fixed at 20 ms, and a value of N is fixed at 4. When the PBCH period or the SS block burst set period is 5 ms, X=10 ms, and N=4, TTI=20 ms, and a quantity of times of repeated transmission is 2. When the PBCH period is 20 ms, X=10 ms, and N=4, TTI=80 ms, and a quantity of times of repeated transmission is 8, in other words, the TTI is always four times the PBCH period. It may be understood that the value of N may also change with the PBCH period. This is not described herein by using an example.
2. The network device indicates the PBCH period, the SS block burst set period, or the RMSI period by using MIB information on a PDCH.
3. After receiving the MIB information added by the network device to the PBCH, the terminal device learns of the PBCH period or the SS block burst set period, and may simultaneously determine, based on information that is about the relationship between the PBCH period and X and that is pre-stored based on a protocol or received from the network device, the period in which the RMSI is to be received, to be specific, the first time point at which the RMSI is to be received, and information about the PBCH period. Details are not shown in the following Table 9.

**Table 9**

| PBCH period (or SS block burst set period) | TTI period | A quantity of times of repeated transmission | Transmission period X | Association relationship |
|---|---|---|---|---|
| 5 ms | 20 ms | 2 | 10 ms | TTI is four times the PBCH period |
| 10 ms | 40 ms | 4 | 10 ms | TTI is four times the PBCH period |
| 20 ms | 80 ms | 8 | 10 ms | TTI is four times the PBCH period |
| 40 ms | 160 ms | 16 | 10 ms | TTI is four times the PBCH period |
| 80 ms | 160 ms | 32 | 10 ms | TTI is four times the PBCH period |
| 160 ms | 640 ms | 64 | 10 ms | TTI is four times the PBCH period |
| ... | | ... | ... | ... |

In a possible implementation, the TTI period and the PBCH period are in a one-to-one correspondence. The following performs description by using Manner 9 as an example.

Manner 9: In Manner 9, the period X, of repeated transmission, in which the repeated RMSI is to be transmitted in one TTI is a preset value, to be specific, a preset fixed value, and the association relationship between the TTI period and the PBCH period or the SS block burst set period is a one-to-one correspondence. A specific implementation may be as follows:
1. X is fixed, and a direct mapping relationship between the TTI period and the PBCH period or the SS block burst set period may be a one-to-one mapping relationship. For example, X is fixed at 10 ms, in the one-to-one relationship, when the PBCH period or the SS block burst set period is 5 ms, TTI=20 ms, and a quantity of times of repeated transmission is 2; or when the PBCH period is 20 ms, TTI=40 ms, and a quantity of times of repeated transmission is 4.
2. The network device indicates the PBCH period, the SS block burst set period, or the TTI period by using MIB information on a PBCH. For example, the PBCH period may be 5 ms, 10 ms, 20 ms, 40 ms, 80 ms, and 160 ms.
3. After receiving the MIB information added by the network device to the PBCH, the terminal device learns of the PBCH period or the SS block burst set period or information about the TTI period of the RMSI, and may determine, based on information that is about a relationship between the PBCH period and the RMSI period and that is pre-stored based on a protocol or received from the network device, the information about the TTI period in which the RMSI is to be received. Details are shown in the following Table 10.

**Table 10**

| PBCH period (or SS block burst set period) | TTI period | A quantity of times of repeated transmission | Transmission period X | Association relationship |
|---|---|---|---|---|
| 5 ms | 20 ms | 2 | 10 ms | One-to-one correspondence |
| 10 ms | 30 ms | 3 | | One-to-one correspondence |
| 20 ms | 40 ms | 4 | | One-to-one correspondence |
| 40 ms | 50 ms | 5 | | One-to-one correspondence |
| 80 ms | 60 ms | 6 | | One-to-one correspondence |
| 160 ms | 70 ms | 7 | | One-to-one correspondence |
| ... | | ... | | ... |

In a possible implementation, the TTI and the PBCH period are in a one-to-many relationship. The following performs description by using Manner 6 as an example.

Manner 10: In Manner 10, the TTI period is a preset value, to be specific, a preset fixed value, and the association relationship between the transmission period X and the PBCH period or the SS block burst set period is a one-to-many correspondence, where the transmission period X is a period in which the repeated RMSI is to be transmitted in the TTI period. A specific implementation may be as follows:
1. A value of X is fixed, and it is specified that a correspondence between the TTI period and the PBCH period or the SS block burst set period may be a one-to-many correspondence. For example, X is fixed at 10 ms, in the one-to-many relationship, when the PBCH period is 5 ms and 10 ms, TTI=20 ms, and a quantity of times of repeated transmission is 2; or when the PBCH period is 20 ms and 40 ms, TTI=40 ms, and a quantity of times of repeated transmission is 4.
2. The network device indicates the PBCH period, the SS block burst set period, or information about the RMSI period by using MIB information on a PDCH. For example, the PBCH period may be 5 ms, 10 ms, 20 ms, 40 ms, 80 ms, and 160 ms.
3. After receiving the MIB information added by the network device to the PBCH, the terminal device learns of information about the PBCH period or information about the RMSI, and may simultaneously determine, based on information that is about a relationship between the PBCH period or the SS block burst set period and the RMSI period and that is pre-stored based on a protocol or received from the network device, some or all information about the period in which the RMSI is to be received, or some or all of information about the PBCH. The relationship is shown in the following Table 11.

**Table 11**

| PBCH period (or SS block burst set period) | TTI period | A quantity of times of repeated transmission | Period X of repeated transmission | Association relationship |
|---|---|---|---|---|
| 5 ms | 20 ms | 2 | 10 ms | One-to-many correspondence |
| 10 ms | | | | |
| 20 ms | 40 ms | 4 | | One-to-many correspondence |
| 40 ms | | | | |
| 80 ms | 80 ms | 8 | | One-to-many |
| 160 ms | | | | correspondence |
| ... | | ... | | ... |

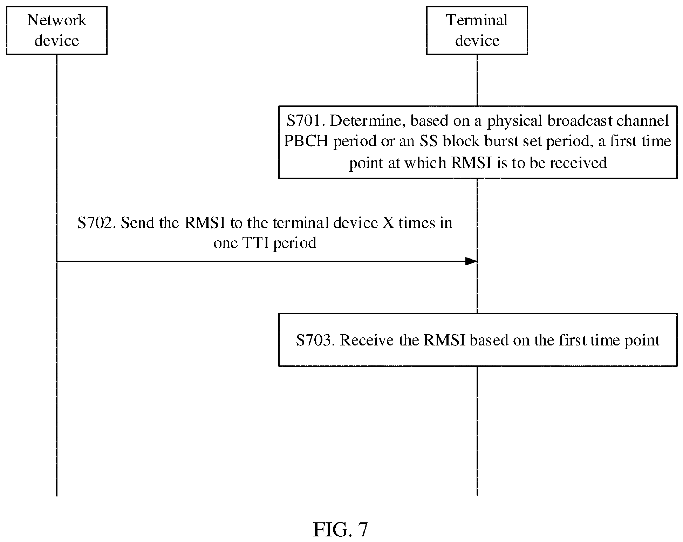

FIG. 7 is a schematic flowchart of still another information sending and receiving method according to an embodiment of the present invention. The method may be applied to the communications system in FIG. 3. The following performs description from a perspective of an interaction between a network device and a terminal device with reference to FIG. 7. The method may include the following step S701 to step S703.

Step S701: The terminal device determines, based on a physical broadcast channel PBCH period or an SS block burst set period, a first time point at which RMSI is to be received.

Step S702: The network device sends the RMSI to the terminal device X times in one TTI period.

Step S703: The terminal device receives the RMSI based on the first time point.

Specifically, for descriptions of step S701 and step S703, refer to related descriptions of step S401 and step S403 corresponding to FIG. 4. Details are not described herein again.

The TTI period is a preset value, X is a multiple of the PBCH period or the SS block burst set period, or X and the PBCH period are in a one-to-one correspondence or a one-to-many relationship, and in a process in which the RMSI is sent once, the network device sends at least one piece of RMSI by using at least one beam or antenna port.

A difference between step S702 and step S402 corresponding to FIG. 4 lies in that, in step S402 corresponding to FIG. 4, there is no concept of a TTI, in other words, there is no repeated transmission of the RMSI. However, in this embodiment of the present invention, that the network device sends the RMSI to the terminal device X times means that the RMSI is repeatedly transmitted X times in one TTI. Repeated transmission performed X times may be periodic repeated transmission, or may be non-periodic repeated transmission. Therefore, the terminal device needs to know the TTI period of the RMSI and a specific transmission interval for repeatedly transmitting the RMSI in the TTI period, so as to receive the RMSI at a correct first time.

FIG. 6 is a schematic diagram of repeatedly transmitting RMSI in a TTI according to an embodiment of the present invention. In FIG. 6, it is assumed that a TTI period is 80 ms, and RMSI is repeatedly transmitted four times in one TTI period, a transmission time interval may be a periodic transmission interval of 20 ms, or may be non-periodic transmission intervals of 10 ms, 20 ms, and 30 ms. The following performs description by using two types of association modes.

In a first type of association mode, in this embodiment of the present invention, it is proposed that the TTI period is a preset value, and a value of X is associated with the PBCH period or the SS block burst set period, where X is a quantity of times of repeated transmission in one TTI. To be specific, the network device and the terminal device agree on that the TTI is a fixed period, and then agree on an association relationship between X and the PBCH period or the SS block burst set period, where X is the quantity of times of repeatedly transmitting the RMSI in one TTI. In this case, the terminal device may determine the first time at which the RMSI is to be received each time, provided that the terminal device learns of the PBCH period or the SS block burst set period. The following describes how to specify an association relationship between X and the PBCH period in this application.

In a possible implementation, the TTI period is a multiple of the PBCH period or the SS block burst set period, and there may specifically be an integer multiple relationship or a fractional multiple relationship between the TTI period and the PBCH period or the SS block burst set period. The following performs description by using Manner 7 as an example.

Manner 11: In Manner 11, the TTI period is a preset value, to be specific, a preset fixed value, and the association relationship between X and the PBCH period or the SS block burst set period is a multiple relationship, where X is the quantity of times of repeatedly transmitting the RMSI in the TTI period. A specific implementation may be as follows:
1. The TTI period of the RMSI is fixed, and it is specified that X is N times the PBCH period or the SS block burst set period. For example, the TTI is fixed at 160 ms, and a value of N is fixed at 2/5. When the PBCH period is 5 ms, N=2/5, X=2; or when the PBCH period is 20 ms, N=2/5, X=8. It may be understood that the value of N may also change with the PBCH period. This is not described herein by using an example.
2. The network device indicates the PBCH period or the SS block burst set period by using MIB information on a PBCH. For example, the PBCH period may be 5 ms, 10 ms, 20 ms, 40 ms, 80 ms, and 160 ms.
3. After receiving the MIB information added by the network device to the PBCH, the terminal device learns of the PBCH period or the SS block burst set period or information about an RMSI period, and may simultaneously determine, based on information that is about the relationship between the PBCH period and X and that is pre-stored based on a protocol or received from the network device, the period in which the RMSI is to be received and the PBCH period. Details are shown in the following Table 12.

**Table 12**

| PBCH period (or SS block burst set period) | TTI period | A quantity X of times of repeated transmission | Transmission period | Association relationship |
|---|---|---|---|---|
| 5 ms | 160 ms | 2 | 160 ms | X is 2/5 times the PBCH period |
| 10 ms | | 4 | 80 ms | X is 2/5 times the PBCH period |
| 20 ms | | 8 | 40 ms | X is 2/5 times the PBCH period |
| 40 ms | | 16 | 20 ms | X is 2/5 times the PBCH period |
| 80 ms | | 32 | 10 ms | X is 2/5 times the |
| | | | | PBCH period |
| 160 ms | | 64 | 5 ms | X is 2/5 times the PBCH period |
| ... | | ... | ... | ... |

In a possible implementation, X and the PBCH period or the SS block burst set period are in a one-to-one correspondence. The following performs description by usingManner 5 as an example.

Manner 12: In Manner 12, the TTI period is a preset value, to be specific, a preset fixed value, and the association relationship between X and the PBCH period or the SS block burst set period is a one-to-one correspondence, where X is the quantity of times of repeatedly transmitting the RMSI in the TTI period. A specific implementation may be as follows:
1. The TTI period is fixed, and it is specified that the RMSI is repeatedly transmitted in one TTI by using X redundancy versions (RV), and/or the RMSI is repeatedly transmitted in one TTI in Y data scrambling manners, where X is an integer greater than or equal to 1, and the transmission time interval is equal to X*Y.
A direct mapping relationship between X and the PBCH period or the SS block burst set period may be a one-to-one mapping relationship. For example, in the one-to-one relationship, the TTI is fixed at 160 ms. When the PBCH period is 5 ms, X=64, and a period in which the repeated RMSI is to be transmitted is 5 ms; or when the PBCH period is 20 ms, X=16, and an RMSI period is 20 ms.
2. The network device indicates the PBCH period, the SS block burst set period, or information about the RMSI period by using MIB information on a PBCH. For example, the PBCH period may be 5 ms, 10 ms, 20 ms, 40 ms, 80 ms, and 160 ms.
3. After receiving the MIB information added by the network device to the PBCH, the terminal device learns of the PBCH period or the SS block burst set period or the RMSI period, and may determine, based on information that is about a relationship between the PBCH period and the RMSI period and that is pre-stored based on a protocol or received from the network device, the period in which the RMSI is to be received, to be specific, the first time point, or the PBCH period. Details are shown in the following Table 13.

**Table 13**

| PBCH period (or SS block burst set period) | TTI period | A quantity X of times of repeated transmission | Transmission period | Association relationship |
|---|---|---|---|---|
| 5 ms | 160 ms | 64 | 5 ms | One-to-one correspondence |
| 10 ms | | 32 | 10 ms | One-to-one correspondence |
| 20 ms | | 16 | 20 ms | One-to-one correspondence |
| 40 ms | | 8 | 40 ms | One-to-one correspondence |
| 80 ms | | 5 | 64 ms | One-to-one correspondence |
| 160 ms | | 4 | 80 ms | One-to-one correspondence |
| ... | | ... | ... | ... |

In a possible implementation, X and the PBCH period are in a one-to-many relationship, where X is the quantity of times of repeatedly transmitting the RMSI in one TTI. The following performs description by using Manner 13 as an example.

Manner 13: In Manner 13, the TTI period is a preset value, to be specific, a preset fixed value, and the association relationship between X and the PBCH period or the SS block burst set period is a one-to-many correspondence, where X is the quantity of times of repeatedly transmitting the RMSI in the TTI period. A specific implementation may be as follows:
1. The TTI period is fixed, and it is specified that a direct mapping relationship between X and the PBCH period or the SS block burst set period may be a one-to-many mapping relationship, where X is the quantity of times of repeatedly transmitting the RMSI in one TTI. For example, in the one-to-many relationship, the TTI period is fixed at 160 ms. When the PBCH period is 5 ms and 10 ms, the quantity X of times of repeated transmission is equal to 4, and a period of repeated transmission is 80 ms; or when the PBCH period is 20 ms and 40 ms, the quantity X of times of repeated transmission is equal to 20, and a period of repeated transmission is 40 ms.
2. The network device indicates the PBCH period, the SS block burst set period, or information about the RMSI period by using MIB information on a PBCH. For example, the PBCH period may be 5 ms, 10 ms, 20 ms, 40 ms, 80 ms, and 160 ms.
3. After receiving the MIB information added by the network device to the PBCH, the terminal device learns of the PBCH period or the SS block burst set period, and may determine, based on information that is about a relationship between the PBCH period and the quantity of times ofrepeated transmission and that is pre-stored based on a protocol or received from the network device, all or some of the information about the period in which the RMSI is to be received, or all or some of information about the PBCH. Details are shown in the following Table 14.

**Table 14**

| PBCH period (or SS block burst set period) | TTI period | A quantity X of times of repeated transmission | Transmission period | Association relationship |
|---|---|---|---|---|
| 5 ms | 160 ms | 4 | 80 ms | One-to-many correspondence |
| 10 ms | | | | |
| 20 ms | | 8 | 40 ms | One-to-many correspondence |
| 40 ms | | | | |
| 80 ms | | 16 | 20 ms | One-to-many correspondence |
| 160 ms | | | | |
| ... | | ... | ... | ... |

In a second type, in this embodiment of the present invention, it is proposed that a quantity X of times of repeatedly transmitting the RMSI in one TTI is a preset value. Optionally, the network device indicates a value of X by using signaling. The signaling may specifically be RRC signaling, DCI signaling, or a MAC-CE. The TTI period is associated with the PBCH period. To be specific, the network device and the terminal device agree on that the quantity X of times of repeatedly transmitting the RMSI in one TTI is fixed. Then, the network device and the terminal device agree on an association relationship between one TTI period and the PBCH period. In this case, the terminal device may determine a period in which the RMSI is to be received each time, to be specific, the first time, provided that the terminal device learns of the PBCH period. The following describes how to specify an association relationship between X and the PBCH period in this application.

In a possible implementation, the TTI period is a multiple of the PBCH period, and there may specifically be an integer multiple relationship or a fractional multiple relationship between the TTI period and the PBCH period. The following performs description by using Manner 14 as an example.

Manner 14: In Manner 14, the quantity X of times of repeatedly transmitting the RMSI in one TTI is a preset value, to be specific, a preset fixed value, and the association relationship between the TTI period and the PBCH period or the SS block burst set period is a multiple relationship. A specific implementation may be as follows:
1. The quantity of times of repeatedly transmitting the RMSI in the TTI period is fixed. For example, the quantity of times of repeated transmission is always X regardless of the PBCH period. For example, the quantity X of times of repeated transmission in one TTI period is equal to 4.
2. The TTI period is associated with the PBCH period. For example, the TTI period is N times the PBCH period or the SS block burst set period, and N=4. When the PBCH period is 20 ms, the TTI period is 80 ms, and the quantity X of times of repeated transmission is fixed at 4, and in this case, the period of repeated transmission is 20 ms. When the PBCH period is 40 ms, the TTI period is 160 ms, the quantity X of times of repeated transmission is fixed at 4, and the period of repeated transmissionis 40 ms.
3. The network device indicates the PBCH period, the SS block burst set period, or information about the RMSI period by using MIB information on a PBCH. For example, the PBCH period may be 5 ms, 10 ms, 20 ms, 40 ms, 80 ms, and 160 ms.
4. After receiving the MIB information added by the network device to the PBCH, the terminal device learns of the PBCH period or the SS block burst set period, and may simultaneously determine, based on information that is about a relationship between the PBCH period and the RMSI period and that is pre-stored based on a protocol or received from the network device, all or some of the information about the period in which the RMSI is to be received and some or all of information about the PBCH. Details are shown in the following Table 15.

**Table 15**

| PBCH period (or SS block burst set period) | TTI period | A quantity X of times of repeated transmission | Transmission period | Association relationship |
|---|---|---|---|---|
| 5 ms | 20 ms | 4 | 5 ms | The TTI period is four times the PBCH period |
| 10 ms | 40 ms | | 10 ms | The TTI period is four times the PBCH period |
| 20 ms | 80 ms | | 20 ms | The TTI period is four times the PBCH period |
| 40 ms | 160 ms | | 40 ms | The TTI period is four times the PBCH period |
| 80 ms | 160 ms | | 80 ms | The TTI period is four times the PBCH period |
| 160 ms | 640 ms | | 160 ms | The TTI period is four times the PBCH period |
| ... | ... | | ... | |

In a possible implementation, the TTI period and the PBCH period are in a one-to-one correspondence. The following performs description by using Manner 5 as an example.

Manner 15: In Manner 15, the quantity X of times of repeatedly transmitting the RMSI in one TTI is a preset value, to be specific, a preset fixed value, and the association relationship between the TTI period and the PBCH period or the SS block burst set period is a one-to-one correspondence. A specific implementation may be as follows:
1. A value of X is fixed, and a direct mapping relationship between the TTI period and the PBCH period or the SS block burst set period may be a one-to-one mapping relationship. For example, the quantity X of times of repeated transmission is fixed at four, and in the one-to-one relationship, when the PBCH period is 5 ms, TTI=20 ms, and the period of repeated transmission is 5 ms; or when the PBCH period is 20 ms, TTI=80 ms, and the period of repeated transmission is 20 ms.
2. The network device indicates the PBCH period, the SS block burst set period, or information about the RMI period by using MIB information on a PBCH. For example, the PBCH period may be 5 ms, 10 ms, 20 ms, 40 ms, 80 ms, and 160 ms.
3. After receiving the MIB information added by the network device to the PBCH, the terminal device learns of the PBCH period, and may simultaneously determine, based on information that is about a relationship between the PBCH period or the SS block burst set period and the RMSI period and that is pre-stored based on a protocol or received from the network device, all or some of the information about the period in which the RMSI is to be received and some or all of information about the PBCH. Details are shown in the following Table 16.

**Table 16**

| PBCH period (or SS block burst set period) | TTI period | A quantity X of times of repeated transmission | Transmission period | Association relationship |
|---|---|---|---|---|
| 5 ms | 20 ms | 4 | 5 ms | One-to-one correspondence |
| 10 ms | 40 ms | | 10 ms | One-to-one correspondence |
| 20 ms | 80 ms | | 20 ms | One-to-one correspondence |
| 40 ms | 120 ms | | 30 ms | One-to-one correspondence |
| 80 ms | 160 ms | | 40 ms | One-to-one correspondence |
| 160 ms | 240 ms | | 60 ms | One-to-one correspondence |
| ... | | | | ... |

In a possible implementation, the TTI and the PBCH period are in a one-to-many relationship. The following performs description by using Manner 16 as an example.

Manner 16: In Manner 16, the TTI period is a preset value, to be specific, a preset fixed value, and the association relationship between X and the PBCH period or the SS block burst set period is a one-to-many correspondence, where X is the quantity of times of repeatedly transmitting the RMSI in the TTI period. A specific implementation may be as follows:
1. A value of X is fixed, and a correspondence between the TTI period and the PBCH period or the SS block burst set period may be a one-to-many correspondence. For example, X is fixed at four, and in the one-to-many relationship, when the PBCH period is 5 ms and 10 ms, TTI=20 ms, and the period of repeated transmission is 5 ms; or when the PBCH period is 20 ms and 40 ms, TTI=40 ms, and the period of repeated transmission is 10 ms.
2. The network device indicates the PBCH period or the SS block burst set period or information about the RMSI period by using MIB information on a PBCH. For example, the PBCH period or the SS block burst set period may be 5 ms, 10 ms, 20 ms, 40 ms, 80 ms, and 160 ms.
3. After receiving the MIB information added by the network device to the PBCH, the terminal device learns of the PBCH period or the SS block burst set period, and may simultaneously determine, based on information that is about a relationship between the PBCH period and the RMSI period and that is pre-stored based on a protocol or received from the network device, all or some of the information about the period in which the RMSI is to be received and some or all information about the PBCH. Details are shown in the following Table 17.

**Table 17**

| PBCH period (or SS block burst set period) | TTI period | A quantity X of times of repeated transmission | Transmission period | Association relationship |
|---|---|---|---|---|
| 5 ms | 20 ms | 4 | 5 ms | One-to-many correspondence |
| 10 ms | | | | |
| 20 ms | 40 ms | | 10 ms | One-to-many correspondence |
| 40 ms | | | | |
| 80 ms | 80 ms | | 20 ms | One-to-many correspondence |
| 160 ms | | | | |
| ... | | | | ... |

This application further provides Manner 17: When a plurality of times of repeated transmission in one TTI are non-periodic, assuming that the transmission interval is agreed on in advance, and there is an association relationship between the quantity X of times of repeated retransmission and the PBCH period or the SS block burst set period, in this case, the terminal device may learn of the quantity of times of repeated transmission by using the PBCH period. Further, because the transmission interval in one TTI is fixed, the terminal device may finally determine a complete TTI period based on the PBCH period. Details are shown in the following Table 18.

**Table 18**

| PBCH period (or SS block burst set period) | TTI period | A quantity X of times of repeated transmission | Transmission interval | Association relationship |
|---|---|---|---|---|
| 5 ms | 30 ms | 2 | 10 ms | One-to-many correspondence |
| 10 ms | 30 ms | 2 | 10 ms | One-to-many correspondence |
| 20 ms | 80 ms | 3 | 10 ms and 20 ms | One-to-many correspondence |
| 40 ms | 80 ms | 3 | 10 ms and 20 ms | One-to-many correspondence |
| 80 ms | 160 ms | 4 | 10 ms, 20 ms, and 50 ms | One-to-many correspondence |
| 160 ms | 160 ms | 4 | 10 ms, 20 ms, and 40 ms | One-to-many correspondence |
| ... | ... | ... | ... | ... |

This application further provides Manner 18.

When a plurality of times of repeated transmissions in one TTI are non-periodic, assuming that the transmission interval is agreed on in advance, and it is specified that there is an association relationship between the TTI period and the PBCH period, in this case, the terminal device may learn of the quantity of times of repeated transmission by using the PBCH period or the SS block burst set period. Further, because the transmission interval in one TTI is fixed, the terminal device may finally determine a complete TTI period based on the PBCH period. Details are shown in the following Table 19.

**Table 19**

| PBCH period (or SS block burst set period) | TTI period | A quantity X of times of repeated transmission | Transmission interval |
|---|---|---|---|
| 5 ms | 80 ms | 4 | 10 ms, 20 ms, 50 ms, and 80 ms |
| 10 ms | 80 ms | 4 | 10 ms, 20 ms, 50 ms, and 80 ms |
| 20 ms | 80 ms | 4 | 10 ms, 20 ms, 50 ms, and 80 ms |
| 40 ms | 160 ms | 5 | 10 ms, 20 ms, 50 ms, and 80 ms |
| 80 ms | 160 ms | 5 | 10 ms, 20 ms, 50 ms, and 80 ms |
| 160 ms | 160 ms | 5 | 10 ms, 20 ms, 40 ms, and 80 ms |
| ... | ... | ... | ... |

It may be understood that, for the association relationship between the TTI period and the PBCH period in the foregoing Manner 17 and Manner 18, refer to the association relationships in the foregoing Manner 11 to Manner 16. Details are not described herein again.

This application further provides Manner 19: When a plurality of times of repeated transmissions in one TTI are non-periodic, assuming that the transmission interval is agreed on in advance, and it is specified that the TTI period and the quantity of times of repeated transmission are also fixed, in this case, the terminal device may directly learn of the first time. Details are shown in the following Table 20.

**Table 20**

| PBCH period (or SS block burst set period) | TTI period | A quantity X of times of repeated transmission | Transmission interval |
|---|---|---|---|
| 5 ms | 80 ms | 4 | 10 ms, 20 ms, and 40 ms |
| 10 ms | | | 10 ms, 20 ms, and 40 ms |
| 20 ms | | | 10 ms, 20 ms, and 40 ms |
| 40 ms | | | 10 ms, 20 ms, and 40 ms |
| 80 ms | | | 10 ms, 20 ms, and 40 ms |
| 160 ms | | | 10 ms, 20 ms, and 40 ms |
| ... | | | ... |

This application further provides Manner 20: When the scheduling period of the RMSI is 80 ms or 160 ms, the quantity of repetitions based on different RV versions or other scheduling manners are agreed on in advance, for example, 4 or 1, or configured by using an MIB. Alternatively, the period of the RMSI of different RV versions is 20 ms or 40 ms.

This application further provides Manner 21: A minimum value of the RMSI period and/or a minimum value of the transmission time interval TTI period are constrained by using a protocol or configured by the network device. For example, the minimum value of the RMSI period is 160 ms. If the network device configures the RMSI period as N times the SS burst set period/PBCH period by using an MIB, an actual RMSI period is a larger value of 160 ms and N times the PBCH period. The minimum value of the transmission time interval TTI period is 160 ms. If the network device configures the transmission time interval TTI period as N times the SS burst set period/PBCH period by using an MIB, an actual transmission time interval TTI period is a larger value of 160 ms and N times the PBCH period.

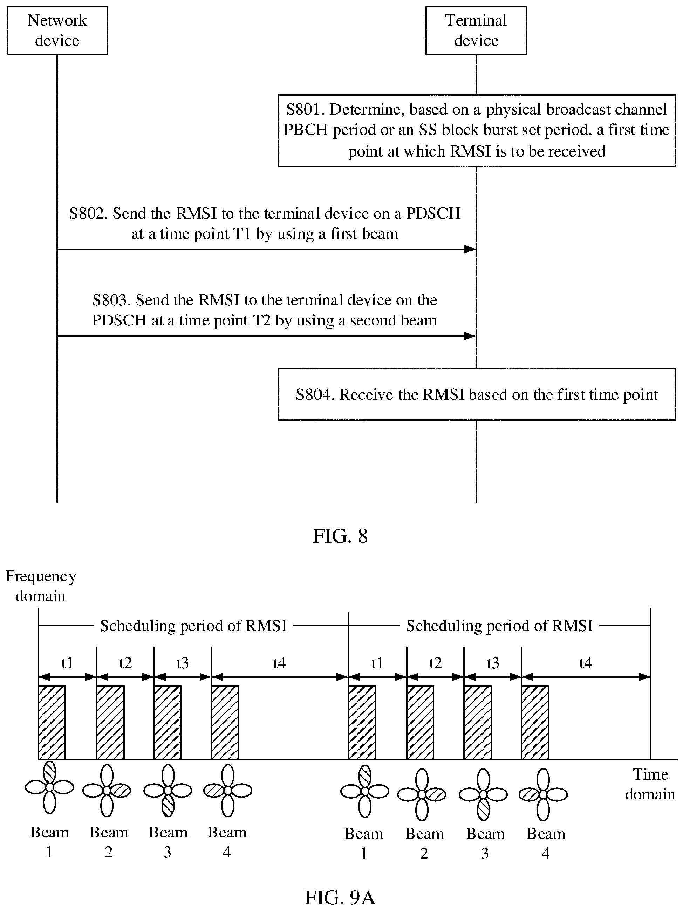

FIG. 8 is a schematic flowchart of still another information sending and receiving method according to an embodiment of the present invention. The method may be applied to the communications system in FIG. 3. The following performs description from a perspective of an interaction between a network device and a terminal device with reference to FIG. 8. The method may include the following step S801 to step S803.

Step S801: The terminal device determines, based on a physical broadcast channel PBCH period or an SS block burst set period, a first time point at which RMSI is to be received.

Step S802: The network device sends the RMSI to the terminal device on a PDSCH at a time point T1 by using a first beam.

Step S803: The network device sends the RMSI to the terminal device on the PDSCH at a time point T2 by using a second beam, where the RMSI includes at least one of the following information: configuration information of a random access channel, configuration information of a paging channel, configuration information of a downlink shared channel, configuration information of an uplink shared channel, a public land mobile network identifier list, a tracking area code, cell barring access information, scheduling information of an open systems interconnection OSI or a system information block SIB, a system information value tag, bandwidth indication information, and cell reselection information.

Step S804: The terminal device receives the RMSI based on the first time point.

In this embodiment of the present invention, in a period in which the RMSI is transmitted (including a time interval X in which there is no repeated transmission and a period X in which there is repeated transmission), different beams are also periodic in each time interval X, or may not be periodic and have a time offset relative to a period location. The period or the time offset may be configured by using an MIB. The different beams may be periodic, or a combination of a plurality of beams may be periodic. The different beams may be different antenna ports, or time-frequency resources of corresponding SS blocks, or time-frequency resources of RMSIs that are QCL with SS blocks, or may be time-frequency resources used by the base station to transmit same content to different areas of a coverage cell, or different antenna ports are periodic.

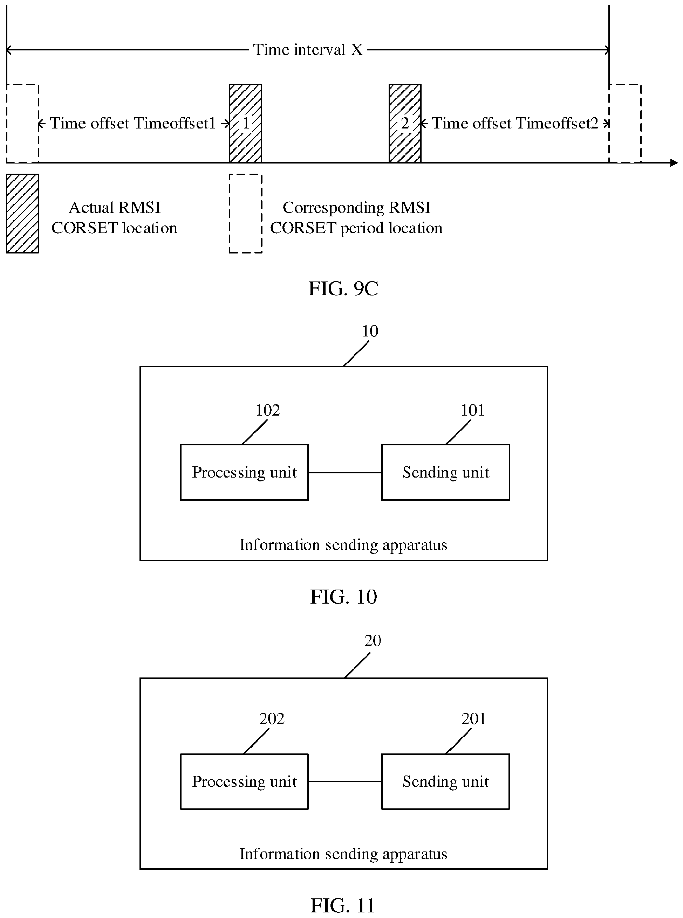

As shown in FIG. 9A, FIG. 9 is a schematic diagram of a period in which RMSI is transmitted by using different beams according to an embodiment of the present invention. For example, a beam 1, a beam 2, a beam 3, and a beam 4 respectively correspond to transmission periods 't1, t2, t3, and t4. FIG. 9B is a schematic diagram of a period in which RMSI is transmitted by using different beams in one TTI. FIG. 9C is a schematic diagram of transmission performed by using different beams that have a time offset relative to a period location. An example is used for description. A period in which repeated RMSI is transmitted by using a different beam is 10 ms, and a period location of the period of repeated transmission is a subframe 5 of each frame, to be specific, the RMSI is transmitted in a subframe 5 of a frame 0, the RMSI is transmitted in a subframe 5 of a frame 1, and the RMSI is transmitted in a subframe 5 of a frame 2. Assuming that a time offset of a first beam is -1 subframe, a time offset of a second beam is 1 subframe, and a time offset of a third beam is 0, a location at which the RMSI is transmitted in the frame 0 is a subframe 4, a transmission location of the RMSI in the frame 1 is a subframe 6, a location of transmission performed by using the third beam is the subframe 5.

In the embodiments of this application, function modules of a transmit end device or a receive end device may be divided based on the foregoing method examples. For example, function modules may be divided based on functions, or two or more functions may be integrated into one processing module. The integrated module may be implemented in a form of hardware, or may be implemented in a form of a software function module. It should be noted that the module division in the embodiments of this application is an example, and is merely logical function division. There may be another division manner in an actual implementation. The following performs description by using an example in which function modules are divided based on functions.

FIG. 10 is a schematic structural diagram of an information sending apparatus according to an embodiment of the present invention. The information sending apparatus may be a network device or a chip. The information sending apparatus may include a processing unit 102 and a sending unit 101. Detailed descriptions of the units are as follows:
The processing unit 102 is configured to determine, based on a PBCH period or an SS block burst set period, a period in which RMSI is to be sent.

The sending unit 101 is configured to send the remaining minimum system information RMSI to a terminal device by using X as the period, where X is a multiple of the PBCH period, or X and the PBCH period are in a one-to-one correspondence or a one-to-many relationship, and in a process in which the RMSI is sent once, the network device sends at least one piece of RMSI by using at least one beam or antenna port.

In a possible implementation, the sending unit 101 is further configured to send indication information to the terminal device, where the indication information is used to indicate the PBCH period.

It should be noted that, for functions of the functional units in the information sending apparatus 10 described in this embodiment of the present invention, reference may be made to related descriptions in the foregoing method embodiments shown in FIG. 1 to FIG. 9. Details are not described herein again.

FIG. 11 is a schematic structural diagram of another information sending apparatus according to an embodiment of the present invention. The information sending apparatus may be a network device or a chip. The information sending apparatus may include a processing unit 202 and a sending unit 201. Detailed descriptions of the units are as follows:
The processing unit 202 is configured to determine an RMSI period based on a PBCH period or an SS block burst set period.

The sending unit 201 is configured to send the minimum system information RMSI to a terminal device by using X as the period in one transmission time interval TTI period, or the network device sends the RMSI to a terminal device X times in one TTI period, where the TTI period is a preset value, X is a multiple of the PBCH period, or X and the PBCH period are in a one-to-one correspondence or a one-to-many relationship, and in a process in which the RMSI is sent once, the network device sends at least one piece of RMSI by using at least one beam or antenna port.

In a possible implementation, the communications unit 201 is further configured to send indication information to the terminal device, where the indication information is used to indicate the PBCH period.

It should be noted that, for functions of the functional units in the information sending apparatus 20 described in this embodiment of the present invention, reference may be made to related descriptions in the foregoing method embodiments shown in FIG. 1 to FIG. 9. Details are not described herein again.

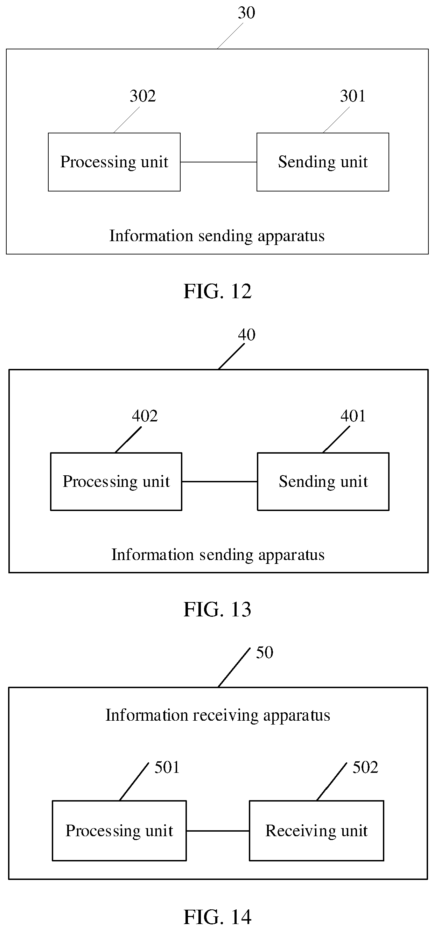

FIG. 12 is a schematic structural diagram of an information sending apparatus according to an embodiment of the present invention. The information sending apparatus may be a network device or a chip. The information sending apparatus may include a processing unit 302 and a sending unit 301. Detailed descriptions of the units are as follows:
The processing unit 302 is configured to determine an RMSI period based on a PBCH period or an SS block burst set period.

The sending unit 301 is configured to send the minimum system information RMSI to a terminal device by using X as the period in one transmission time interval TTI period, or the network device sends the RMSI to a terminal device X times in one TTI period, where X is a preset value, the TTI period is a multiple of the PBCH period, or the TTI period and the PBCH period are in a one-to-one correspondence or a one-to-many relationship, and in a process in which the RMSI is sent once, the network device sends at least one piece of RMSI by using at least one beam or antenna port.

In a possible implementation, the sending unit 301 is further configured to send indication information to the terminal device, where the indication information is used to indicate the PBCH period.

In a possible implementation, the sending unit 301 is further configured to indicate a value of X by using signaling.

It should be noted that, for functions of the functional units in the information sending apparatus 30 described in this embodiment of the present invention, reference may be made to related descriptions in the foregoing method embodiments shown in FIG. 1 to FIG. 9. Details are not described herein again.

FIG. 13 is a schematic structural diagram of an information sending apparatus according to an embodiment of the present invention. The information sending apparatus may be a network device or a chip. The information sending apparatus may include a processing unit 402 and a sending unit 401. Detailed descriptions of the units are as follows:
The processing unit 402 is configured to determine an RMSI period based on a PBCH period or an SS block burst set period.

The sending unit 401 is configured to send the RMSI to a terminal device on a PDSCH at a time point T1 by using a first beam.

The sending unit 401 is further configured to send the RMSI to the terminal device on the PDSCH at a time point T2 by using a second beam, where the RMSI includes at least one of the following information: configuration information of a random access channel, configuration information of a paging channel, configuration information of a downlink shared channel, configuration information of an uplink shared channel, a public land mobile network identifier list, a tracking area code, cell barring access information, scheduling information of an open systems interconnection OSI or a system information block SIB, a system information value tag, bandwidth indication information, and cell reselection information; and a time interval between T2 and T1 is associated with the physical broadcast channel PBCH period.

In a possible implementation, the sending unit 401 is further configured to send indication information to the terminal device, where the indication information is used to indicate the PBCH period.

It should be noted that, for functions of the functional units in the information sending apparatus 40 described in this embodiment of the present invention, reference may be made to related descriptions in the foregoing method embodiments shown in FIG. 1 to FIG. 9. Details are not described herein again.

FIG. 14 is a schematic structural diagram of an information receiving apparatus according to an embodiment of the present invention. The information sending apparatus may be a terminal device or a chip. The information receiving apparatus may include a processing unit 501 and a receiving unit 502. Detailed descriptions of the units are as follows:
The processing unit 501 is configured to determine, based on a physical broadcast channel PBCH period, a first time point at which RMSI is to be received, where the RMSI is RMSI received by the terminal device from a network device by using X as a period, X is a multiple of the PBCH period, or X and the PBCH period are in a one-to-one correspondence or a one-to-many relationship, and in a process in which the RMSI is received once, the terminal device receives at least one piece of RMSI by using at least one beam or antenna port.

The receiving unit 502 is configured to receive the RMSI based on the first time point.

In a possible implementation, the communications unit 502 is further configured to receive indication information sent by the network device, where the indication information is used to indicate the PBCH period.

It should be noted that, for functions of the functional units in the information receiving apparatus 50 described in this embodiment of the present invention, reference may be made to related descriptions in the foregoing method embodiments shown in FIG. 1 to FIG. 9. Details are not described herein again.

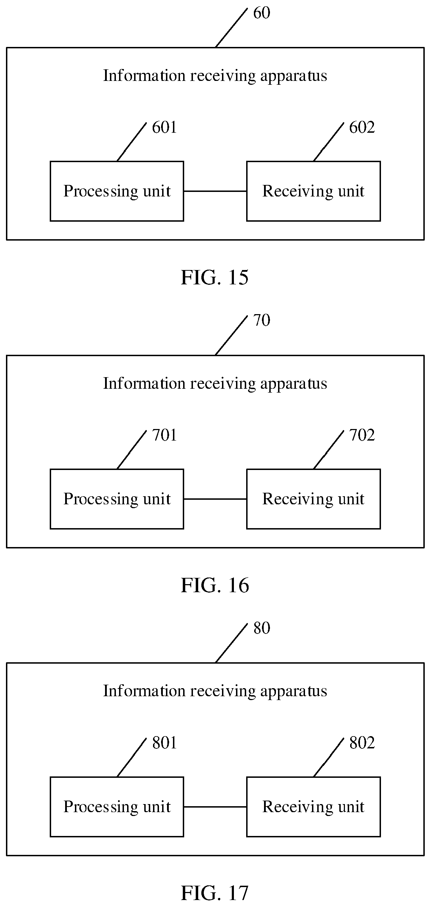

FIG. 15 is a schematic structural diagram of an information receiving apparatus according to an embodiment of the present invention. The information sending apparatus may be a terminal device or a chip. The information receiving apparatus may include a processing unit 601 and a receiving unit 602. Detailed descriptions of the units are as follows:
The processing unit 601 is configured to determine, based on a physical broadcast channel PBCH period, a first time point at which RMSI is to be received, where the RMSI is RMSI received by the terminal device from a network device by using X as a period in one transmission time interval TTI period, or RMSI received by the terminal device from a network device X times in one TTI period, the TTI period is a preset value, X is a multiple of the PBCH period, or X and the PBCH period are in a one-to-one correspondence or a one-to-many relationship, and in a process in which the RMSI is received once, the terminal device receives at least one piece of RMSI by using at least one beam or antenna port.

The receiving unit 602 is configured to receive the RMSI based on the first time point.

In a possible implementation, the receiving unit 602 is further configured to receive indication information sent by the network device, where the indication information is used to indicate the PBCH period.

It should be noted that, for functions of the functional units in the information receiving apparatus 60 described in this embodiment of the present invention, reference may be made to related descriptions in the foregoing method embodiments shown in FIG. 1 to FIG. 9. Details are not described herein again.

FIG. 16 is a schematic structural diagram of an information receiving apparatus according to an embodiment of the present invention. The information sending apparatus may be a terminal device or a chip. The information receiving apparatus may include a processing unit 701 and a receiving unit 702. Detailed descriptions of the units are as follows:
The processing unit 701 is configured to determine, based on a physical broadcast channel PBCH period, a first time point at which RMSI is to be received, where the RMSI is RMSI received by the terminal device from a network device by using X as a period in one transmission time interval TTI period, or RMSI received by the terminal device from a network device X times in one TTI period, X is a preset value, the TTI period is a multiple of the PBCH period, or the TTI period and the PBCH period are in a one-to-one correspondence or a one-to-many relationship, and in a process in which the RMSI is received once, the terminal device receives at least one piece of RMSI by using at least one beam or antenna port.

The receiving unit 702 is configured to receive the RMSI based on the first time point.

In a possible implementation, the receiving unit 702 is further configured to receive indication information sent by the network device, where the indication information is used to indicate the PBCH period.

It should be noted that, for functions of the functional units in the information receiving apparatus 70 described in this embodiment of the present invention, reference may be made to related descriptions in the foregoing method embodiments shown in FIG. 1 to FIG. 9. Details are not described herein again.

FIG. 17 is a schematic structural diagram of an information receiving apparatus according to an embodiment of the present invention. The information sending apparatus may be a terminal device or a chip. The information receiving apparatus may include a processing unit 801 and a receiving unit 802. Detailed descriptions of the units are as follows:
The processing unit 801 is configured to determine, based on a physical broadcast channel PBCH period, a first time point at which RMSI is to be received, where the RMSI is a system message that is received by the terminal device from a network device on a PDSCH at a time point T1 by using a first beam and received from the network device on the PDSCH at a time point T2 by using a second beam, and the RMSI includes at least one of the following information: configuration information of a random access channel, configuration information of a paging channel, configuration information of a downlink shared channel, configuration information of an uplink shared channel, a public land mobile network identifier list, a tracking area code, cell barring access information, scheduling information of an open systems interconnection OSI or a system information block SIB, a system information value tag, bandwidth indication information, and cell reselection information; and a time interval between T2 and T1 is associated with the PBCH period.

The receiving unit 802 is configured to receive the RMSI based on the first time point.

In a possible implementation, the receiving unit 802 is further configured to receive indication information sent by the network device, where the indication information is used to indicate the PBCH period.

It should be noted that, for functions of the functional units in the information receiving apparatus 80 described in this embodiment of the present invention, reference may be made to related descriptions in the foregoing method embodiments shown in FIG. 1 to FIG. 9. Details are not described herein again.

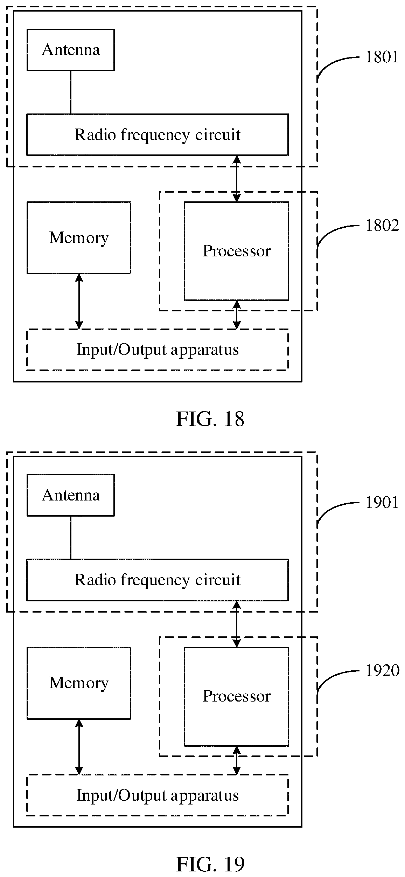

When information receiving apparatuses in FIG. 14 to FIG. 17 are terminal devices, FIG. 18 is a simplified schematic structural diagram of a terminal device. For ease of understanding and illustration, in FIG. 18, an example in which the terminal device is a mobile phone is used. As shown in FIG. 18, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to receive and transmit a radio frequency signal in a form of an electromagnetic wave. The input/output apparatus such as a touchscreen, a display screen, or a keyboard, is mainly configured to: receive data entered by a user, and output data to the user. It should be noted that some types of terminal devices may not have the input/output apparatus.

When data needs to be sent, the processor performs baseband processing on the to-be-sent data, and then outputs a baseband signal to the radio frequency circuit. The radio frequency circuit performs radio frequency processing on the baseband signal, and then sends the radio frequency signal in a form of an electromagnetic wave by using the antenna. When data is sent to the terminal, the radio frequency circuit receives a radio frequency signal by using the antenna, converts the radio frequency signal into a baseband signal, and outputs the baseband signal to the processor. The processor converts the baseband signal into data, and processes the data. For ease of description, FIG. 18 shows only one memory and one processor. In an actual terminal product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have a transceiving function may be considered as a transceiver unit of the terminal device, and the processor that has a processing function may be considered as a processing unit of the terminal device. As shown in FIG. 18, the terminal device includes a transceiver unit 1801 and a processing unit 1802. The transceiver unit may also be referred to as a transceiver, a transceiver, a transceiver apparatus, or the like. The processing unit may also be referred to as a processor, a processing board, a processing module, a processing apparatus, or the like. The processing unit may be a central processing unit (English: central processing unit, CPU for short), a network processor (English: network processor, NP for short), or a combination of a CPU and an NP. The processing unit may further include a hardware chip. The hardware chip may be an application-specific integrated circuit (English: application-specific integrated circuit, ASIC for short), a programmable logic device (English: Programmable Logic Device, PLD for short), or a combination thereof. The PLD may be a complex programmable logic device (English: complex programmable logic device, CPLD for short), a field-programmable gate array (English: field-programmable gate array, FPGA for short), generic array logic (English: generic array logic, GAL for short), or any combination thereof. Optionally, a component for implementing a receiving function in the transceiver unit 1801 may be considered as a receiving unit, and a component for implementing a sending function in the transceiver unit 1801 may be considered as a sending unit. In other words, the transceiver unit 1801 includes the receiving unit and the sending unit. The transceiver unit may also be sometimes referred to as a transceiver, a transceiver, a transceiver circuit, or the like. The receiving unit may also be sometimes referred to as a receiver, a receiver, a receiver circuit, or the like. The sending unit may also be sometimes referred to as a transmitter, a transmitter, a transmitter circuit, or the like. When the communications apparatus is a chip, the chip includes a transceiver unit and a processing unit. The transceiver unit may be an input/output circuit or a communications interface. The processing unit is a processor, a microprocessor, or an integrated circuit integrated on the chip.

When information sending apparatuses in FIG. 10 to FIG. 13 are network devices, specifically, for example, the information sending apparatus is a base station. FIG. 19 is a simplified schematic structural diagram of a base station. The base station includes a part 1901 and a part 1902. The part 1901 is mainly configured to: send and receive a radio frequency signal, and convert the radio frequency signal and a baseband signal. The part 1902 is mainly configured to: perform baseband processing, control the base station, and the like. The part 1901 may be generally referred to as a transceiver unit, a transceiver, a transceiver circuit, a transceiver, or the like. The part 1902 is generally a control center of the base station, and may be generally referred to as a processing unit, configured to control the base station to perform steps performed by a receive end device in the foregoing figures. For details, refer to descriptions of the foregoing related parts.

A transceiver unit in the part 1901 may also be referred to as a transceiver, a transceiver, or the like, and includes an antenna and a radio frequency unit. The radio frequency unit is mainly configured to perform radio frequency processing. Optionally, a component for implementing a receiving function in the part 1901 may be considered as a receiving unit, and a component for implementing a sending function may be considered as a sending unit. In other words, the part 1901 includes the receiving unit and the sending unit. The receiving unit may also be referred to as a receiver, a receiver, a receiver circuit, or the like. The sending unit may also be referred to as a transmitter, a transmitter, a transmitter circuit, or the like.

The part 1902 may include one or more boards. Each board may include one or more processors and one or more memories. The processor is configured to read and execute a program in the memory, to implement a baseband processing function and controlling of the base station. If there are a plurality of boards, the boards may be interconnected to improve a processing capability. In an optional implementation, a plurality of boards may share one or more processors, or a plurality of boards share one or more memories, or a plurality of boards simultaneously share one or more processors.

The communications apparatus may be a chip, and the chip includes a transceiver unit and a processing unit. The transceiver unit may be an input/output circuit or a communications interface of the chip. The processing unit is a processor, a microprocessor, or an integrated circuit integrated on the chip. The chip may be applied to the foregoing network device, and supports the network device in performing the foregoing methods.

All or some of the foregoing embodiments may be implemented by using software, hardware, firmware, or any combination thereof. When a software program is used to implement the embodiments, the embodiments may be all or partially implemented in a form of a computer program product. The computer program product includes one or more computer instructions. When the computer program instructions are loaded and executed on a computer, the procedures or functions according to the embodiments of this application are all or partially generated. The computer may be a general-purpose computer, a dedicated computer, a computer network, or another programmable apparatus. The computer instructions may be stored in a computer readable storage medium or may be transmitted from a computer readable storage medium to another computer readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

Although this application is described with reference to the embodiments herein, in a process of implementing this application that claims protection, a person skilled in the art may understand and implement other changes in the disclosed embodiments.

An embodiment of the present invention further provides a chip. The chip includes a communications interface and a processor. The processor is configured to control the communications interface to receive or send a signal, and is configured to process a signal received by the communications interface or generate a signal to be sent by the communications interface.

Specifically, the processor is configured to perform procedures or steps on a terminal side in the information transmission methods provided in the foregoing method embodiments, or the processor is configured to perform procedures or steps on a network device side in the information transmission methods provided in the foregoing method embodiments.

Optionally, the chip further includes a storage module, and the storage module stores an instruction. The processing module reads the instruction stored in the storage module to execute a related operation, and control the communications interface to perform a related transmitting and receiving operation.

It should be understood that, in the embodiments of this application, sequence numbers of the foregoing processes do not mean execution sequences. The execution sequences of the processes should be determined based on functions and internal logic of the processes, and should not be construed as any limitation on the implementation processes of the embodiments of the present invention.

A person of ordinary skill in the art may be aware that, in combination with the examples described in the embodiments disclosed in this specification, units and algorithm steps can be implemented by electronic hardware or a combination of computer software and electronic hardware. Whether these functions are executed by hardware or software depends on specific applications and design constraints of the technical solutions. A person skilled in the art may use different methods to implement the described functions for each particular application, but it should not be considered that such implementation goes beyond the scope of this application.

It may be clearly understood by a person skilled in the art that, for the purpose of convenient and brief description, for a specific working process of the foregoing system, apparatus, and unit, reference can be made to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement the embodiments, the embodiments may be all or partially implemented in a form of a computer program product. The computer program product includes one or more computer instructions. When the computer program instructions are loaded and executed on a computer, the procedures or functions according to the embodiments of the present invention are all or partially generated. The computer may be a general-purpose computer, a dedicated computer, a computer network, or another programmable apparatus. The computer instructions may be stored in a computer readable storage medium, or may be transmitted by using the computer readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like.

A person of ordinary skill in the art may understand that all or some of the procedures of the methods in the embodiments may be implemented by a computer program instructing related hardware. The program may be stored in a computer readable storage medium. When the program runs, the procedures of the foregoing method embodiments may be performed. The foregoing storage medium includes any medium that can store program code, such as a read-only memory (read-only memory, ROM), a random access memory (random access memory, RAM), a magnetic disk, or an optical disc.

## Claims

1. An information sending apparatus (20) comprising:
a processing unit (202) configured to determine, a period X for sending a system information block SIB1; and
a sending unit (201) configured to send at least one SIB1 to a terminal device within a transmission time interval, TTI, period by using the X as a period, wherein each of different beams is periodic in each period X and SIB1s are transmitted by using the different beams, and each of the different beams is a time-frequency resource of one SIB1 which is quasi co-located, QCL, with its corresponding synchronization signal, SS, block, and a period value of the each of the different beams is configured in a master information block, MIB,
wherein the TTI period is N times of a period of a physical broadcast channel, PBCH, a value of N is 4 and the period X is 20 ms; or wherein the TTI period is 160ms, and the period X is the same as the period of the PBCH;
wherein the period of the PBCH is 5 ms, 10 ms, 20 ms, 40 ms, 80 ms or 160ms.

2. The apparatus (20) according to claim 1, wherein a time offset between an actual transmitted SIB1 CORSET time location and a corresponding SIB1 CORESET period location is 0.

3. The apparatus (20) according to claim 1 or 2, wherein sending unit (201) is configured to send the at least one SIB1 to the terminal device by using at least one beam or antenna port; and a quantity of the at least one beam or antenna port is the same as a quantity of beams or antenna ports for sending the at least one synchronization signal block, SS block.

4. The apparatus (20) according to claim 3, wherein the at least one antenna port sending the at least one SIB1 and the at least one SS block have a quasi co-located, QCL, relationship.

5. The apparatus (20) according to any one of claims 1 to 4, wherein an SIB1 comprises at least one of the following information: configuration information of a random access channel, configuration information of a paging channel, configuration information of a downlink shared channel, configuration information of an uplink shared channel, a public land mobile network identifier list, a tracking area code, cell barring access information, scheduling information of other system information, OSI, or a system information block SIB, a system information value tag, bandwidth indication information, or cell reselection information.

6. An information receiving apparatus (60) comprising:
a processing unit (601), configured to determine a first time to receive one or more system information blocks, SIB1s, where the one or more SIB1s are SIB1s received from a network device in a transmission time interval TTI period by using X as a period (S502); wherein each of different beams is periodic in each period X and SIB1s are transmitted by using the different beams, and each of the different beams is a time-frequency resource of one SIB1 which is quasi co-located, QCL, with its corresponding synchronization signal, SS, block, and a period value of the each of the different beams is configured in a master information block, MIB,
wherein the TTI period is N times of a period of a physical broadcast channel, PBCH, a value of N is 4 and the period X is 20 ms; or wherein the TTI period is 160ms, and the period X is the same as the period of the PBCH;
wherein the period of the PBCH is 5 ms, 10 ms, 20 ms, 40 ms, 80 ms, or 160 ms.

7. The apparatus (60) according to claim 6, wherein a time offset between an actual transmitted SIB1 CORSET time location and a corresponding SIB1 CORESET period location is 0.

8. The apparatus (60) according to claim 6 or 7, wherein the receiving unit (602) is configured to receive the one or more SIB1s in at least one SIB1 sent by the network device by using at least one beam or antenna port.

9. The apparatus (60) according to claim 8, wherein the receiving unit (602) is configured to receive the one or more SIB1s based on at least one synchronization signal block, SS block, in the each period X; a quantity of beams or antenna ports of the at least one synchronization signal block, SS block, in the PBCH period is the same as a quantity of the at least one beam or antenna port corresponding to the at least one SIB1 in the X period.

10. The apparatus (20) according to any one of claims 6 to 9, wherein an SIB1 comprises at least one of the following information: configuration information of a random access channel, configuration information of a paging channel, configuration information of a downlink shared channel, configuration information of an uplink shared channel, a public land mobile network identifier list, a tracking area code, cell barring access information, scheduling information of other system information, OSI, or a system information block SIB, a system information value tag, bandwidth indication information, or cell reselection information.

11. An information receiving method applied in a terminal device, comprising:
determining a first time to receive one or more system information blocks, SIB1s, where the one or more SIB1s are SIB1s received from a network device in a transmission time interval TTI period by using X as a period (S502); wherein each of different beams is periodic in each period X and SIB1s are transmitted by using the different beams, and each of the different beams is a time-frequency resource of one SIB1 which is quasi co-located, QCL, with its corresponding synchronization signal, SS, block, and a period value of the each of the different beams is configured in a master information block, MIBand
receiving the one or more SIB1s according to the first time (S503);
wherein the TTI period is N times of a period of a physical broadcast channel, PBCH, a value of N is 4 and the period X is 20 ms; or wherein the TTI period is 160ms, and the period X is the same as the period of the PBCH;
wherein the period of the PBCH is a 5 ms, 10 ms, 20 ms, 40 ms, 80 ms, or, 160 ms.

12. An information sending method applied in a network device, comprising:
determine, a period X for sending a system information block SIB1; and
sending at least one SIB1 to a terminal device within a transmission time interval, TTI, period by using the X as a period, wherein each of different beams is periodic in each period X and SIB1s are transmitted by using the different beams, and each of the different beams is a time-frequency resource of one SIB1 which is quasi co-located, QCL, with its corresponding synchronization signal, SS, block, and a period value of the each of the different beams is configured in a master information block, MIB;
wherein the TTI period is N times of a period of a physical broadcast channel, PBCH, a value of N is 4 and the period X is 20 ms; or wherein the TTI period is 160ms, and the period X is the same as the period of the PBCH;
wherein the period of the PBCH is 5 ms, 10 ms, 20 ms, 40 ms, 80 ms, or 160ms.

## Patentansprüche

1. Informationssendeeinrichtung (20), die umfasst:
eine Verarbeitungseinheit (202), die konfiguriert ist, um einen Zeitraum X zum Senden eines Systeminformationsblocks SIB1 zu bestimmen; und
eine Sendeeinheit (201), die konfiguriert ist, um mindestens einen SIB1 innerhalb einer Übertragungszeitintervall(TTI)-Periode durch Verwenden des X als eine Periode an ein Endgerät zu senden, wobei jeder von unterschiedlichen Strahlen in jeder Periode X periodisch ist und SIB1s durch Verwenden der unterschiedlichen Strahlen übertragen werden, und jeder der unterschiedlichen Strahlen eine Zeit-Frequenz-Ressource eines SIB1 ist, die quasi-kolokalisiert (QCL) mit ihrem entsprechenden Synchronisationssignal(SS)-Block ist, und ein Periodenwert jedes der unterschiedlichen Strahlen in einem Master-Informationsblock (MIB) konfiguriert ist, wobei die TTI-Periode ein N-Faches einer Periode eines physikalischen Broadcast-Kanals (PBCH) beträgt, ein Wert von N 4 beträgt und die Periode X 20 ms beträgt;
oder wobei die TTI-Periode 160 ms beträgt, und die Periode X die gleiche wie die Periode des PBCH ist;
wobei die Periode des PBCH 5 ms, 10 ms, 20 ms, 40 ms, 80 ms oder 160 ms beträgt.

2. Einrichtung (20) nach Anspruch 1, wobei ein Zeitversatz zwischen einem tatsächlich übertragenen SIB1-CORSET-Zeitort und einem entsprechenden SIB1-CORESET-Periodenort 0 beträgt.

3. Einrichtung (20) nach Anspruch 1 oder 2, wobei die Sendeeinheit (201) konfiguriert ist, um den mindestens einen SIB1 durch Verwenden von mindestens einem Strahl- oder Antennenanschluss an das Endgerät zu senden; und eine Anzahl des mindestens einen Strahl- oder Antennenanschlusses gleich einer Anzahl von Strahl- oder Antennenanschlüssen zum Senden des mindestens einen Synchronisationssignalblocks (SS-Blocks) ist.

4. Einrichtung (20) nach Anspruch 3, wobei der mindestens eine Antennenanschluss, der den mindestens einen SIB1 sendet, und der mindestens eine SS-Block eine quasikolokalisierte (QCL) Beziehung aufweisen.

5. Einrichtung (20) nach einem der Ansprüche 1 bis 4, wobei ein SIB1 mindestens eine der folgenden Informationen umfasst: Konfigurationsinformationen eines Direktzugriffskanals, Konfigurationsinformationen eines Paging-Kanals, Konfigurationsinformationen eines gemeinsam genutzten Downlink-Kanals, Konfigurationsinformationen eines gemeinsam genutzten Uplink-Kanals, eine Kennungsliste eines öffentlichen landgestützten Mobilfunknetzes, einen Verfolgungsbereichscode, Zellsperrzugriffsinformationen, Planungsinformationen anderer Systeminformationen (OSI), oder eines Systeminformationsblocks (SIB), ein Systeminformationswert-Tag, Bandbreitenangabeinformationen oder Zellneuauswahlinformationen.

6. Informationsempfangseinrichtung (60), die umfasst:
eine Verarbeitungseinheit (601), die konfiguriert ist, um einen ersten Zeitpunkt zu bestimmen, um einen oder mehrere Systeminformationsblöcke (SIB1s) zu empfangen, wobei der eine oder die mehreren SIB1s SIB1s, die von einer Netzwerkvorrichtung durch Verwenden von X als eine Periode (S502) in einer Übertragungszeitintervall(TTI)-Periode empfangen werden, sind; wobei jeder von unterschiedlichen Strahlen in jeder Periode X periodisch ist und SIB1s durch Verwenden der unterschiedlichen Strahlen übertragen werden, und jeder der unterschiedlichen Strahlen eine Zeit-Frequenz-Ressource eines SIB1 ist, die quasi-kolokalisiert (QCL) mit ihrem entsprechenden Synchronisationssignal(SS)-Block ist, und ein Periodenwert jedes der unterschiedlichen Strahlen in einem Master-Informationsblock (MIB) konfiguriert ist,
wobei die TTI-Periode das N-Fache einer Periode eines physikalischen Broadcast-Kanals (PBCH) beträgt, ein Wert von N 4 beträgt und die Periode X 20 ms beträgt;
oder wobei die TTI-Periode 160 ms beträgt, und die Periode X die gleiche wie die Periode des PBCH ist;
wobei die Periode des PBCH 5 ms, 10 ms, 20 ms, 40 ms, 80 ms oder 160 ms beträgt.

7. Einrichtung (60) nach Anspruch 6, wobei ein Zeitversatz zwischen einem tatsächlich übertragenen SIB1-CORSET-Zeitort und einem entsprechenden SIB1-CORESET-Periodenort 0 beträgt.

8. Einrichtung (60) nach Anspruch 6 oder 7, wobei die Empfangseinheit (602) konfiguriert ist, um den einen oder die mehreren SIB1s in mindestens einem SIB1, der durch die Netzwerkvorrichtung durch Verwenden von mindestens einem Strahl- oder Antennenanschluss gesendet wird, zu empfangen.

9. Einrichtung (60) nach Anspruch 8, wobei die Empfangseinheit (602) konfiguriert ist, um den einen oder die mehreren SIB1s basierend auf mindestens einem Synchronisationssignalblock (SS-Block) in der jeweiligen Periode X zu empfangen; eine Anzahl von Strahl- oder Antennenanschlüssen des mindestens einen Synchronisationssignalblocks (SS-Block) in der PBCH-Periode die gleiche wie eine Anzahl des mindestens einen Strahl- oder Antennenanschluss, der dem mindestens einen SIB1 in der X Periode entspricht, ist.

10. Einrichtung (20) nach einem der Ansprüche 6 bis 9, wobei ein SIB1 mindestens eine der folgenden Informationen umfasst: Konfigurationsinformationen eines Direktzugriffskanals, Konfigurationsinformationen eines Paging-Kanals, Konfigurationsinformationen eines gemeinsam genutzten Downlink-Kanals, Konfigurationsinformationen eines gemeinsam genutzten Uplink-Kanals, eine Kennungsliste eines öffentlichen landgestützten Mobilfunknetzes, einen Verfolgungsbereichscode, Zellsperrzugriffsinformationen, Planungsinformationen anderer Systeminformationen (OSI), oder eines Systeminformationsblocks (SIB), ein Systeminformationswert-Tag, Bandbreitenangabeinformationen oder Zellneuauswahlinformationen.

11. Informationsempfangsverfahren, das in einem Endgerät angewendet wird, das umfasst:
Bestimmen eines ersten Zeitpunkts, um einen oder mehrere Systeminformationsblöcke (SIB1) zu empfangen, wobei der eine oder die mehreren SIB1s SIB1s sind, die von einer Netzwerkvorrichtung durch Verwenden von X als eine Periode (S502) in einer Übertragungszeitintervall(TTI)-Periode empfangen werden;
wobei jeder von unterschiedlichen Strahlen in jeder Periode X periodisch ist und SIB1s durch Verwenden der unterschiedlichen Strahlen übertragen werden, und jeder der unterschiedlichen Strahlen eine Zeit-Frequenz-Ressource eines SIB1 ist, die quasi-kolokalisiert (QCL) mit ihrem entsprechenden Synchronisationssignal(SS)-Block ist, und ein Periodenwert jedes der unterschiedlichen Strahlen in einem Master-Informationsblock (MIB) konfiguriert ist, und
Empfangen des einen oder der mehreren SIB1s gemäß dem ersten Zeitpunkt (S503);
wobei die TTI-Periode das N-Fache einer Periode eines physikalischen Broadcast-Kanals (PBCH) beträgt, ein Wert von N 4 beträgt und die Periode X 20 ms beträgt;
oder wobei die TTI-Periode 160 ms beträgt, und die Periode X die gleiche wie die Periode des PBCH ist;
wobei die Periode des PBCH 5 ms, 10 ms, 20 ms, 40 ms, 80 ms oder 160 ms beträgt.

12. Informationssendeverfahren, das in einer Netzwerkvorrichtung angewendet wird, das umfasst:
Bestimmen einer Periode X zum Senden eines Systeminformationsblocks SIB1; und Senden mindestens eines SIB1 an ein Endgerät innerhalb einer Übertragungszeitintervall(TTI)-Periode durch Verwenden des X als eine Periode, wobei jeder von unterschiedlichen Strahlen in jeder Periode X periodisch ist und SIB1s durch Verwenden der unterschiedlichen Strahlen übertragen werden, und jeder der unterschiedlichen Strahlen eine Zeit-Frequenz-Ressource eines SIB1 ist, die quasi-kolokalisiert (QCL) mit ihrem entsprechenden Synchronisationssignal(SS)-Block ist, und ein Periodenwert jedes der unterschiedlichen Strahlen in einem Master-Informationsblock (MIB) konfiguriert ist;
wobei die TTI-Periode das N-Fache einer Periode eines physikalischen Broadcast-Kanals (PBCH) beträgt, ein Wert von N 4 beträgt und die Periode X 20 ms beträgt;
oder wobei die TTI-Periode 160 ms beträgt, und die Periode X die gleiche wie die Periode des PBCH ist;
wobei die Periode des PBCH 5 ms, 10 ms, 20 ms, 40 ms, 80 ms oder 160 ms beträgt.

## Revendications

1. Appareil d'envoi d'informations (20) comprenant :
une unité de traitement (202) configurée pour déterminer une période X pour l'envoi d'un bloc d'informations système SIB1 ; et
une unité d'envoi (201) configurée pour envoyer au moins un SIB1 à un dispositif terminal au cours d'une période d'intervalle de temps de transmission, TTI, en utilisant le X en tant que période, dans lequel chacun des faisceaux différents est périodique dans chaque période X et des SIB1 sont transmis en utilisant les différents faisceaux, et chacun des différents faisceaux est une ressource temps-fréquence d'un SIB1 qui est quasi co-localisé, QCL,
avec son bloc de signal de synchronisation, SS, correspondant et une valeur de période de chacun des différents faisceaux est configurée dans un bloc d'informations maître, MIB,
dans lequel la période TTI correspond à N fois d'une période d'un canal de diffusion physique, PBCH, une valeur de N est 4 et la période X est de 20 ms ; ou dans lequel la période TTI est de 160 ms, et la période X est la même que la période du PBCH ;
dans lequel la période du PBCH est de 5 ms, 10 ms, 20 ms, 40 ms, 80 ms ou 160 ms.

2. Appareil (20) selon la revendication 1, dans lequel un décalage temporel entre un emplacement temporel CORSET SIB1 transmis réel et un emplacement de période CORESET SIB1 correspondant est 0.

3. Appareil (20) selon la revendication 1 ou 2, dans lequel une unité d'envoi (201) est configurée pour envoyer l'au moins un SIB1 au dispositif terminal en utilisant au moins un faisceau ou port d'antenne ; et une quantité de l'au moins un faisceau ou port d'antenne est identique à une quantité de faisceaux ou ports d'antenne pour l'envoi de l'au moins un bloc de signal de synchronisation, bloc SS.

4. Appareil (20) selon la revendication 3, dans lequel l'au moins un port d'antenne envoyant l'au moins un SIB1 et l'au moins un bloc SS ont une relation quasi co-localisée, QCL.

5. Appareil (20) selon l'une quelconque des revendications 1 à 4, dans lequel un SIB1 comprend au moins l'une parmi les informations suivantes : des informations de configuration d'un canal d'accès aléatoire, des informations de configuration d'un canal de radiomessagerie, des informations de configuration d'un canal partagé de liaison descendante, des informations de configuration d'un canal partagé de liaison montante, une liste d'identifiants de réseau mobile terrestre public, un code de zone de suivi, des informations d'interdiction d'accès à la cellule, des informations de planification d'autres informations système, OSI,
ou un bloc d'informations système SIB, une étiquette de valeur d'informations système, des informations d'indication de largeur de bande, ou des informations de resélection de cellule.

6. Appareil de réception d'informations (60) comprenant :
une unité de traitement (601), configurée pour déterminer un premier temps pour recevoir un ou plusieurs blocs d'informations système, SIB1, où le ou les SIB1 sont des SIB1 reçus de la part d'un dispositif de réseau dans une période d'intervalle de temps de transmission, TTI, en utilisant X en tant que période (S502) ; dans lequel chacun des faisceaux différents est périodique dans chaque période X et des SIB1 sont transmis en utilisant les différents faisceaux, et chacun des différents faisceaux est une ressource temps-fréquence d'un SIB1 qui est quasi co-localisé, QCL, avec son bloc de signal de synchronisation, SS, correspondant, et une valeur de période de chacun des différents faisceaux est configurée dans un bloc d'informations maître, MIB,
dans lequel la période TTI correspond à N fois d'une période d'un canal de diffusion physique, PBCH, une valeur de N est 4 et la période X est de 20 ms ; ou dans lequel la période TTI est de 160 ms, et la période X est la même que la période du PBCH ;
dans lequel la période du PBCH est de 5 ms, 10 ms, 20 ms, 40 ms, 80 ms, ou 160 ms.

7. Appareil (60) selon la revendication 6, dans lequel un décalage temporel entre un emplacement temporel CORSET SIB1 transmis réel et un emplacement de période CORESET SIB1 correspondant est 0.

8. Appareil (60) selon la revendication 6 ou 7, dans lequel l'unité de réception (602) est configurée pour recevoir le ou les SIB1 dans au moins un SIB1 envoyé par le dispositif de réseau en utilisant au moins un faisceau ou port d'antenne.

9. Appareil (60) selon la revendication 8, dans lequel l'unité de réception (602) est configurée pour recevoir le ou les SIB1 sur la base d'au moins un bloc de signal de synchronisation, bloc SS, dans chaque période X ; une quantité de faisceaux ou ports d'antenne de l'au moins un bloc de signal de synchronisation, bloc SS, dans la période PBCH est la même qu'une quantité de l'au moins un faisceau ou port d'antenne correspondant à l'au moins un SIB1 dans la période X.

10. Appareil (20) selon l'une quelconque des revendications 6 à 9, dans lequel un SIB1 comprend au moins l'une parmi les informations suivantes : des informations de configuration d'un canal d'accès aléatoire, des informations de configuration d'un canal de radiomessagerie, des informations de configuration d'un canal partagé de liaison descendante, des informations de configuration d'un canal partagé de liaison montante, une liste d'identifiants de réseau mobile terrestre public, un code de zone de suivi, des informations d'interdiction d'accès à la cellule, des informations de planification d'autres informations système, OSI,
ou un bloc d'informations système SIB, une étiquette de valeur d'informations système, des informations d'indication de largeur de bande, ou des informations de resélection de cellule.

11. Procédé de réception d'informations appliqué à un dispositif terminal, comprenant :
la détermination d'un premier temps pour recevoir un ou plusieurs blocs d'informations système, SIB1, dans lequel le ou les SIB1 sont des SIB1 reçus en provenance d'un dispositif de réseau dans une période d'intervalle de temps de transmission TTI en utilisant X en tant que période (S502) ; dans lequel chacun des faisceaux différents est périodique dans chaque période X et des SIB1 sont transmis en utilisant les différents faisceaux, et chacun des différents faisceaux est une ressource temps-fréquence d'un SIB1 qui est quasi co-localisé, QCL, avec son bloc de signal de synchronisation, SS, correspondant, et une valeur de période de chacun des différents faisceaux est configurée dans un bloc d'informations maître, MIB et
la réception du ou des SIB1 selon le premier temps (S503) ;
dans lequel la période TTI correspond à N fois d'une période d'un canal de diffusion physique, PBCH, une valeur de N est 4 et la période X est de 20 ms ; ou dans lequel la période TTI est de 160 ms, et la période X est la même que la période du PBCH ;
dans lequel la période du PBCH est de 5 ms, 10 ms, 20 ms, 40 ms, 80 ms, ou 160 ms.

12. Procédé d'envoi d'informations appliqué à un dispositif de réseau, comprenant :
la détermination d'une période X pour l'envoi d'un bloc d'informations système SIB1 ; et
l'envoi d'au moins un SIB1 à un dispositif terminal au cours d'une période d'intervalle de temps de transmission, TTI, en utilisant le X en tant que période, dans lequel chacun des faisceaux différents est périodique dans chaque période X et des SIB1 sont transmis en utilisant les différents faisceaux, et chacun des différents faisceaux est une ressource temps-fréquence d'un SIB1 qui est quasi co-localisé, QCL, avec son bloc de signal de synchronisation, SS, correspondant et une valeur de période de chacun des différents faisceaux est configuré dans un bloc d'information maître, MIB ;
dans lequel la période TTI correspond à N fois d'une période d'un canal de diffusion physique, PBCH, une valeur de N est 4 et la période X est de 20 ms ; ou dans lequel la période TTI est de 160 ms, et la période X est la même que la période du PBCH ;
dans lequel la période du PBCH est de 5 ms, 10 ms, 20 ms, 40 ms, 80 ms, ou 160 ms.
